(19)

**Europäisches Patentamt**

**European Patent Office**

**Office européen des brevets**

(11)  **EP 4 346 263 A1**

(12)  **EUROPEAN PATENT APPLICATION**

(43) Date of publication:
**03.04.2024  Bulletin 2024/14**

(21) Application number: **22306452.8**

(22) Date of filing: **29.09.2022**

(51) International Patent Classification (IPC):
**H04W 24/02** (2009.01)  **H04W 48/02** (2009.01)

(52) Cooperative Patent Classification (CPC):
**H04W 24/02; H04W 48/02**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Mitsubishi Electric R&D Centre Europe B.V.**
**1119 NS  Schiphol Rijk Amsterdam (NL)**
Designated Contracting States:
**FR**
• **MITSUBISHI ELECTRIC CORPORATION**
**Chiyoda-ku**
**Tokyo 100-8310 (JP)**
Designated Contracting States:
**AL AT BE BG CH CY CZ DE DK EE ES FI GB GR HR HU IE IS IT LI LT LU LV MC MK MT NL NO PL PT RO RS SE SI SK SM TR**

(72) Inventor: **KHANFOUCI, Mourad**
**35708 RENNES CEDEX 7 (FR)**

(74) Representative: **Plasseraud IP**
**66, rue de la Chaussée d'Antin**
**75440 Paris Cedex 09 (FR)**

(54)  **OPTIMIZATION OF NETWORK UTILITY GAIN FOR SLICE ADMISSION CONTROL**

(57)  A slice admission control method performed by a slice controller in a communication network system deploying a plurality of network slices and comprising :

a) receiving a slice request containing slice request parameters from a user equipment,

b) obtaining network parameters related to at least an overall state of network resources in the plurality of network slices,

c) determining, for each network slice, :

- a slice service variable ($t_s$) related to required network resources from the network slice to admit the slice request, determined based on the slice request parameters and the network parameters,

- a slice utility gain to be expected from a utilization of the required network resources from the network slice to admit the slice request, determined based on a machine learning model,

- a slice demand load ($p_s$) related to consumed network resources in the network slice if the slice request is admitted, being determined based on the slice utility gain of the network slice (s),

d) transmitting the slice demand loads to the user equipment,

e) feeding the slice demand loads to the machine learning model,

f) based on the slice utility gain, determining a decision on the admission of the slice request.

FIG. 5

EP 4 346 263 A1

**Description**

**Technical Field**

This disclosure relates to the field of resource management in network slicing and more particularly to the optimization of slice admission control mechanisms in sliced 5G networks.

**Background Art**

The deployment of Fifth Generation Mobile Network (or 5G) for wireless communications aims at enhancing service flexibility while taking latency, reliability and/or other Quality of Service (or QoS) requirement of users into account. Such deployment should notably meet the high heterogeneity of the different 5G service types. Such various 5G service types potentially have different service and resource requirements in terms of throughput, access capacity and latency notably. In order to meet such heterogeneity, network slicing consists in managing multiple independent logical networks (i.e., multiple network slices) on the top of a shared physical network infrastructure. Each network slice is flexible and scalable - notably via using flexible virtualized network function (NF) instances - so as to support specific use cases with different requirements on speed, reliability, throughput and/or energy efficiency for example. Each network slice is thus assigned resources including for instance core, radio and transport resources, in order to serve incoming user requests.

The network capability requirements for the network slices are managed by the application layer of the network, which notably consists in an edge computing platform. The application layer manages the Slice Level Specification (SLS) associated to the network slices, notably including the required Quality of Service parameters. Such slice level specification is a set of service level requirements associated with a Service Level Agreement (SLA) to be satisfied by a network slice. Such specification may notably vary between different network slices and enables to determine service profiles of user equipment (or UEs) using the different network slices.

A main issue in the management of network slices lies in the optimization of the network slice allocation to incoming user requests while fulfilling the respective requirements for such slices, which is referred to as the slice admission control policy. For example, a given user may request a given throughput over a given network slice. Yet, the overall throughput allocated to all users of such given network slice is constrained (and thus limited) by the resources allocated to such network slice in the application layer. Such slice admission policy may for example be performed by a slice controller (or a slice orchestrator) of the network infrastructure.

The slice admission control policy consists in receiving and processing user slice requests to exploit the network slices for the running of specific services and applications according to specific service requirements. Each user slice request may refer to a user request to transmit a given throughput over a network slice. Determining an optimized slice admission control policy is particularly complex because it aims at maximizing the network resource usage by accepting (or admitting) as many user slice requests as possible, while taking into account the required Slice Level Specification and the limited quantity of physical resources of the network allocated to the network slices. The slice admission control policy thus consists in admitting or rejecting incoming user slice requests while optimizing the usage of the network capabilities.

Existing methods of slice admission control mechanisms are based on the assumption that user slice requests are received by the slice controller in an uncoordinated and random way. Plus, such existing methods also assume that the service requests from users in terms of service types or Quality of Service requirements are random, unnegotiable and unpredictable. As a consequence, the network infrastructure is subject to unpredictable phases where network resources of network slices are either lacking or unused, depending on the timing and the requirements of the incoming user slice requests. In particular, collisions between multiple incoming requests for the same network slices may regularly occur and lead to the slice controller denying the admission of many slice requests because of slice outage. The slice controller may also, in case of multiple incoming requests for the same network slices that the slice controller cannot concurrently process, buffer the slice requests for an unacceptable time with respect to the delay-tolerance of the services requesting the slice resources.

Moreover, existing methods for managing the slice admission control consider that the Slice Level Specification requirements determined by the application layer are fixed. Consequently, existing slice admission control algorithms consist in deciding to admit or reject slice requests based on fixed constraints with respect to application requirements. Yet, a major number of - notably non-critical - 5G applications may have flexible requirements. Such specification-elastic applications may then take advantage of available resources in the network slices, providing a modulation of their requirements. Existing methods do not take into account the flexibility of such applications in the slice admission control policy.

Existing slice admission control algorithms also face the issues of complexity and slow convergence time, notably due to a large number of network slices and states of the communication network to be considered when receiving slice requests.

# EP 4 346 263 A1

**Summary**

The present disclosure aims at improving the situation and optimizing the network slice admission control policy.

To that end, it is proposed an admission control method performed by a slice controller, for performing a slice admission control in a communication network system, said communication network system deploying a plurality of network slices,
the admission control method comprising steps of:

a) receiving at least one slice admission request from at least one user equipment deployed in the communication network system, said slice admission request containing at least data related to slice request parameters,

b) obtaining network parameters related to at least an overall state of network resources in the plurality of network slices,

c) determining, for each network slice of the plurality of network slices, :

- a slice service variable related to required network resources from the network slice to admit the slice admission request, said slice service variable being determined based on at least the slice request parameters and the network parameters,

- a slice utility gain related to a variation of a slice utility function to be expected from a utilization of the required network resources from the network slice to admit the slice admission request, said slice utility function depending on the slice service variables respectively associated to the plurality of the network slices, the slice utility gain being determined based on at least a machine learning model,

- a slice demand load related to consumed network resources in the network slice if the slice admission request is admitted, said slice demand load being determined based on at least the slice utility gain of the network slice,

d) transmitting the slice demand loads respectively associated to the plurality of the network slices to the user equipment,

e) feeding the slice demand loads respectively associated to the plurality of the network slices to the machine learning model,

f) based on the slice utility gain, determining a decision on the admission of the slice admission request.

As a consequence, the proposed admission control method enables a communication network system to manage the allocation of network resources in a plurality of network slices for a potential plurality of incoming slice admission requests. In particular, the proposed admission control method enables to optimize the allocation of the network resources in the network slices by taking into account both request parameters derived from the incoming slice admission requests and the potential impact of such requests on the network resources of the system.

Moreover, the proposed admission control method relies on a slice utility gain determined based on a machine learning model taking slice demand loads into account. As a consequence, the admission control policy is performed considering the slice utility gains of all network slices (e.g., by maximizing such slice utility gains), such slice utility gains depending on slice demand loads resulting from slice admission requests performed by the user equipment. In particular, such slice demand loads are fed to and learnt by the same machine learning model which enables to estimate and/or predict the slice utility gain of each network slice.

Thus, the proposed admission control method directly links the service utility gain for the plurality network slices with the impact of potentially admitted slice admission requests via slice demand loads, using a unique machine learning model to do so. By transmitting such slice demand loads to user equipment, the proposed admission control method enables a shaping of the slice admission requests. Indeed, by transmitting slice demand loads to the user equipment, the admission control method proposes to provide the user equipment with information related to a resource load weighing on each network slice due to incoming slice admission requests. Such resource load notably leads to some slice admission requests being potentially denied due to network resource outage in some network slices. Yet, based on such transmitted slice demand loads, both the user equipment (that is, the resource requesting parties) and the slice controller (that is, the resource allocation party) are aware of the resources capabilities of all network slices. In particular, user equipment are then able to adapt their requesting scheme according to such slice demand loads. For example, based on such slice demand loads, further slice admission requests may be directed to network slices having the lowest slice demand loads.

In other words, the proposed admission control method enables to coordinate the slice requests emitted by user equipment within the admission control mechanism. In particular, the proposed admission control method introduces slice demand loads so as to challenge the unpredictable, uncoordinated and random nature of the incoming user admission requests which is assumed in existing slice admission control mechanisms. Such slice demand loads are notably fed and learnt to a machine learning model which enables to predict and/or estimate the slice utility gains of the network slices. For example, in the context of the machine learning model comprising a neural network model, a unique neural network may be implemented to learn on both the slice utility gains and the slice demand loads of the network slices.

Moreover, the computational complexity as well as the convergence time of the machine learning model in order to perform the slice admission control method may be reduced on the long run, since at least part of the slice admission request content becomes predictable as slice demand loads are dynamically updated : indeed, incoming slice admission requests will concern the network slices having the lowest slice demand loads.

By a slice controller, it may be understood a computing unit of the communication network system which performs a slice management control mechanism within the network system. In other words, the slice controller may process incoming slice admission requests coming from user equipment and centralize information within the network system so as to decide on an admission of such slice admission request, that is, to admit or deny the slice admission request. Thus, the slice controller may decide on the allocation of the network resources in the plurality of network slices deployed by the network system. In particular, the slice controller may rely on a machine learning model when performing a slice admission control mechanism, so as to optimize the allocation of the network resources for all network slices.

By a communication network system, it may be understood an ensemble of computer components including hardware and software modules, which notably support user (i.e., user equipment) services and applications over a communication network. The communication network may notably be a software-defined network system including an infrastructure layer, a control layer and an application layer. The communication network system may for example be a Fifth Generation (or 5G) system. The communication network system supports user equipment communications by allocating network resources (e.g., from a resource pool) to such user equipment for the exchange of data signals and/or control signals over communication channels of the network system for example. In particular, the communication network system may deploy a plurality of virtually-isolated networks over a common physical infrastructure, also referred to as network slices, in order to meet a plurality of service level specifications (or SLS) and several Quality of Service requirements.

By a network slice, it may be understood a virtual network using part of the radio access network of the communication network. The network slice deploys network functions which ensure the transport of slice-related packets with specific Quality of Service (or QoS) requirements. Each network slice may notably be allocated specific network resources so as to serve specific applications and services for a plurality of user equipment. The network resources allocated to such network slices may for example be set or configured by the application layer of the communication network system.

By a user equipment, it may be understood any electronic device able to communicate over the communication network system. Such user equipment may for example be a computer device, a connected device, a connected vehicle, a mobile device such as a mobile phone, a laptop, a tablet for example. The user equipment may also refer to any electronic device from the Internet of Things (or IoT device).

By a user equipment deployed in the communication network system, it may be understood a user equipment able to be allocated resources from the communication network system, for example allocated via a base station and/or within a cell. The user equipment may for example be connected to the communication network system after having performed an enrolment process or an initial access procedure to the network system beforehand. The user equipment may notably physically belong to a deployed area of the communication network system, so that the user equipment is able to request network resources of the network system.

By a slice admission control, it may be understood an admission control mechanism performed by a slice controller of the communication network system for allocating network resources to incoming slice admission requests emitted by one or several pieces of user equipment. In particular, such slice admission control may regulate the allocation of network resources on the long term so as to optimize a service utility gain of the network system. In other words, the slice admission control may be understood as a slice admission request processing mechanism so as to maximize the use of network resources provided by the network system (that is, by admitting as much slice requests as possible) while guaranteeing the Quality of Service and service performances requested by user equipment. The slice admission control may notably rely on a machine learning model so as to optimize the service utility gain of the network system on the long run.

By a slice admission request (also referred to as a slice admission demand, a slice request, or a slice demand), it may be understood a demand (or a request) for traffic (e.g., a throughput request), and thus for resource allocation, in at least one network slice of the communication network. Such demand is emitted by a user equipment. Such demand may for example refer to a request for transmitting data packets (or application level packets) using resources allocated to at least one specific network slice of the communication network. The demand may include specific requirements concerning Quality of Service parameters such as latency, reliability and/or throughput parameters. For example, a slice request may contain a request for a minimum value of the throughput parameter and/or a maximum value for the latency (that is, a delay tolerance level) for the transmission of application level packets.

By data related to slice request parameters, it may be understood parameters characterizing each slice request received by the slice controller. In particular, slice request parameters may define the service requirements of the user equipment in the slice request. For example, the slice request parameters may include required throughput in one or several network slices. The slice request parameters may also include data related to latency tolerance levels for example.

By network parameters related to an overall state of network resources in the plurality of network slices, it may be understood information determining the nature and/or amount of available network resources to be allocated to network slices. In other words, such network parameters may be understood to reflect a state of the network system in terms of available resources. Such network parameters may for example include a current amount of available cloud resources, computation resources, storage resources, memory resources for example. Such network parameters may for example be provided by a sub-system of the communication network system. Such sub-system may for example includes a core network, an edge computing, a shared access network and/or a transport network of the communication network system.

By determining a parameter (e.g., a slice service variable, a slice utility gain, a slice utility function, a slice demand load) for each network slice of the plurality of network slices, it may be understood that the parameter is proper to each network slice of the communication network system, considering a current state of the network system at the time such parameter is determined.

By a slice service variable, it may be understood a parameter associated to each of the network slices of the network system which may refer to an overall demand parameter that is demanded by users over the network slice. For example, the slice service variable may be understood as the overall throughput demanded by a plurality of incoming slice requests over the corresponding network slice. In other words, the slice service variable may refer to the sum of the demand parameters (e.g., the throughputs) of the user equipment, as required in their respective slice requests, that accessed the network slice. In another embodiment, the slice service variable may be understood as the sum of the throughputs respectively requested by user equipment, via slice requests, that are requesting the access to the corresponding network slice. In yet another embodiment, the service slice variable may be understood as the average of the demand parameters of the user terminals that accessed the network slice or the average demand parameters of the user terminals that are requesting the access to the network slice. The slice service variable may be understood, more generally, as a parameter reflecting the updated state and the Quality of Service parameters (such as throughput, reliability, security, latency...) that may be offered by the corresponding network slice, if such network slice is allocated to the incoming user requests requesting demand parameters from such network slice.

By a slice utility gain, it may be understood a variation of a utility function associated to the use of network resources for the network slice. Thus, a positive slice utility gain may indicate that the considered action (e.g., admitting a slice request in a network slice) generates a positive gain of utility of the corresponding network slice. A negative slice utility gain may yet indicate that the considered action generates a negative gain (that is, a loss) of utility of the corresponding network slice. For example, if a slice request is admitted despite insufficient network resources to be allocated to the network slice for meeting both the demand parameters of such slice request and the requirements of other user equipment already admitted to such network slice may lead to a negative slice utility gain. The slice utility gain may for example be understood as a derivative of a slice utility function associated to the network slice with respect to the corresponding slice service variable.

By a slice utility function, it may be understood a multivariate function associated to a network slice and reflecting a utility in the network resource use for such network slice. In particular, such slice utility function may depend on the slice service variables of all network slices deployed by the network system.

By a slice demand load, it may be understood a parameter reflecting a resource cost of admitting the incoming slice requests for a considered network slice. Thus, a slice demand load may be understood as a "resource price" for the network slice to admit the incoming slice requests. Thus, the higher the slice demand load for a considered network slice, the higher the resource consumption of the user request.

By a machine learning model, it may be understood a learning algorithm such as a reinforcement learning, a neural network, a deep neural network algorithm and/or a deep reinforcement learning model. In particular, such machine learning model is able, based on at least a set of network states, actions taken by a slice controller and slice utility gains, to map a slice admission control mechanism providing the action to be taken by the slice controller so as to optimize (here maximize) an overall utility gain for the network system (for example, by maximizing the sum of the slice utility gains of the plurality of network slices). In particular, in the context of the present disclosure, the machine learning model may be understood as a learning algorithm able to optimize an overall utility gain for the network system by data learning on network parameters, decision on the admission of slice requests, resulting slice utility gains but also on at least slice demand loads.

By feeding a parameter (e.g., slice demand loads) to the machine learning model, it may be understood that the values determined for such parameter are provided as inputs to the machine learning model, so that the predicted (or estimated) value outputted by the machine learning takes such parameter values into account.

By determining a decision on the admission of the slice request, it may be understood an action taken by the slice controller to admit or deny the slice request, that is to allocate network resources to the corresponding user equipment or not. The admission of the slice request may for example be understood as providing the corresponding user equipment with network resources required by such user equipment in the context of the requested service and according to the corresponding demand parameters. The denial of the slice request may for example be understood as buffering or maintain the buffer status of the incoming slice request.

The following characteristics may optionally be performed according to embodiments of the present disclosure.

In a possible embodiment, the slice admission control includes performing a plurality of iterations of at least the steps a) to f), two successive iterations being spaced based on an iteration parameter.

As a consequence, the proposed admission control method may be repeated on a plurality of incoming slice requests from a plurality of user equipment requesting network resources from the plurality of network slices. Moreover, such proposed admission control method may be iterated over time as the overall state of the network resources in the network system (thus the allocation of network resources in the network slices) and the incoming slice requests are evolving. In particular, such iteration leads to an update of the machine learning model so as to optimize the slice admission control mechanism over the iterations.

By an iteration parameter, it may be understood a parameter spacing an iteration from an immediate next iteration of steps a) to f). For example, such iteration parameter may be a time-related parameter such as a periodicity (for example by an order of milliseconds, seconds or minutes). In such case, after a timing corresponding to such time-related parameter passed, another iteration of steps a) to f) is performed. Notably, an updated overall state of the network resources is obtained, updated parameters (e.g., slice service variable, slice utility gain, slice demand load) are determined for the network slices. Such iteration parameter may also relate to a triggering signal received by the slice controller and which triggers the iteration. Such triggering signal may for example be signal received from a buffering unit sending a batch of slice requests to be processed by the slice controller. The iteration parameter may also be a number of slice admission requests processed by the slice controller.

In a possible embodiment, the slice utility gain is determined, at a current iteration, based on a learning of at least the slice demand loads fed to the machine learning model at previous iterations.

As a consequence, the proposed admission control method proposes a slice admission control mechanism based on a learning of specific parameters related to a resource impact of incoming slice requests on the network slices. Thus, the proposed admission control method enables to dynamically take into account (and thus to dynamically adjust) the slice requests on network slices based on their resource impact on the network slices. Such learning notably enables to shape the incoming slice requests and thus to introduce a predictability in the incoming slice requests, as the user equipment will request network resources from network slices having the lowest slice demand loads as possible.

In a possible embodiment, the slice demand load is determined as :

$$p_s = \frac{1}{\lambda} \times \frac{\partial U_s}{\partial t_s}(t_1, \ldots, t_N)$$

where :

- $p_s$ is the slice demand load for the network slice,

- $\lambda$ is a load parameter, said load parameter being related to a total amount of network resources in the plurality of the network slices if the at least one slice request from the at least one user equipment is admitted,

- $t_1, \ldots t_{s\ldots}, t_N$ are the slice service variables respectively associated to the plurality of the network slices,

- $\frac{\partial U_s}{\partial t_s}(t_1, \ldots, t_N)$ is the slice utility gain for the network slice.

As a consequence, the proposed admission control method introduces slice demand load parameters to quantify a resource cost (or impact) of the incoming slice requests for a given network slice. The knowledge of such slice demand loads for both the slice controller and the user equipment emitting slice requests enable to shape incoming slice requests. Such request shaping enables, on the one hand, user equipment to be able to determine a requesting scheme (e.g., by distributing demand parameters of their slice requests among different selected network slices) so as to have as much admitted slice requests as possible and, on the other hand, the slice controller to be able to predict and further anticipate the incoming slice requests and the requested network slices.

By a load parameter, it may be understood a parameter related to a total amount of network resources in the plurality of the network slices, if the at least one slice request from the at least one user equipment is admitted. In other words, the load parameter may express the maximum network resources available if the demands for all network slices are admitted. The load parameter may also be understood as the overall resources consumed by the network slices if all the incoming demands of the network slices are accepted.

In a possible embodiment, the admission control method further comprises, before determining the slice demand load,:

obtaining a value of the load parameter,

and wherein the value of the load parameter is updated between two successive iterations as :

$$\lambda_{k+1} = \lambda_k - \delta_k \left( I - \sum_{s=1}^{N} p_s t_s \right)_k$$

where :

- $\lambda_{k+1}$ is the updated value of the load parameter at iteration k+1,
- $\lambda_k$ is the value of the load parameter at iteration k,
- $I$ is a resource budget parameter,
- $p_s$ is the slice demand load of the network slice,
- $t_s$ is the slice service variable of the network slice,
- $(I - \sum_{s=1}^{N} p_s t_s)_k$ is a difference determined at the iteration k,
- $\delta_k$ is a gradient parameter computed at iteration k, said gradient parameter being related to a variation speed of the load parameter with respect to the iterations k and k+1.

As a consequence, by updating the value of the load parameter, the network system may be more resource efficient at the application layer APP level.

In a possible embodiment, the admission control method further comprises :

feeding the load parameter to the machine learning model,

and wherein the slice utility gain is determined, at a current iteration, based on a learning of at least the load parameter fed to the machine learning model at previous iterations.

As a consequence, the proposed admission control method enables a network resource load forecast, so that the resource consumption of the plurality of network slices may be predicted. Thus, by determining updated values of the load parameter throughout successive iterations and by dynamically learning such values of the load parameter, the traffic in the deployment area may be anticipated for example by reserving more network resources for the slice requests, thus increasing the resource efficiency of the system. The values of the load parameter are indeed used to predict the resource consumption introduced by the slice requests, so that the slice controller may anticipate upcoming slice requests based on such learning.

In a possible embodiment, the admission control method further comprises :

transmitting the load parameter to at least the user equipment.

As a consequence, the proposed admission control method enables to further optimize the request shaping by informing the user equipment emitting slice requests about the load parameter value at the ongoing state of the network system. Thus, the user equipment may select a transmission scheme (and thus a requesting scheme) which optimizes the load reduction over the network system. Indeed, for example, based on received slice demand loads and on received load parameter, the user equipment may estimate the slice utility gain associated to each network slice. The network slice admission control mechanism may then be further optimized, as the user equipment may, in a predictable way, select the less loaded network slices for their transmission (and thus for their slice requests).

In a possible embodiment, after a number of predetermined iterations, the slice admission control is performed based on a sub-part of the plurality of network slices, such sub-part being composed by network slices for which the corresponding slice demand loads are inferior to a predetermined load threshold value.

As a consequence, the proposed admission control method enables to reduce the computation complexity of the slice admission control mechanism as well as the convergence time of the machine learning model enabling to perform the slice admission control mechanism. By only considering a sub-part of the plurality of network slices, for example at each iteration, the slice controller discards some network slices having higher slice demand loads (i.e., with respect to the predetermined load threshold value) when performing the slice admission control. The admission control method thus enables to perform a state space reduction since the number of considered network slices for admitting slice requests is reduced with respect to the total number of network slices deployed in the network system. Indeed, in existing slice admission mechanisms, main backwards are the computation complexity and the convergence time of the learning (e.g., the reinforcement learning) models, as Q-values (that is, in each state of the network system, selecting the action to optimize the overall network resources of the system) are learnt based on sizesignificant state and/or action spaces with a potentially significant number of iterations before having all Q-values learnt.

In the proposed admission control method, the introduction and dynamic update of slice demand loads as well as their transmission to user equipment enable to predict the network slices which will be requested in upcoming slice requests emitted by such user equipment.

By a sub-part of the plurality of network slices, it may be understood some network slices among the plurality of network slices, the number of network slices in such sub-part being inferior to the number of the plurality of network slices. Such sub-part of network slices may notably change between two successive iterations.

By a predetermined load threshold value, it may be understood a preconfigured value (e.g., expressed in resource blocks per throughput unit) comparable to a slice demand load. Such load threshold value may for example be the average or the median of the slice demand loads for all network slices. Such load threshold value may also be configured by the slice controller depending on the number of the plurality of network slices or on a size of a resource pool of the network system for example.

By after a number of predetermined iterations, it may be understood the reaching of an iteration at which the slice demand load variations between two successive iterations is below a specific threshold, predefined for example as 1% of the initial slice demand load. After a number of predetermined iterations may also be understood as a number of iterations for which the average of the variations of the slice demand loads over a specific period is below a specific threshold, that is for example 10% of the value of the initial average of the slice demand loads at the start of such period. After a number of predetermined iterations may also be understood as a fixed number of iterations after which stabilized slice demand loads are considered to be obtained, for example after three, five or ten iterations (stabilized being possibly understood as slice demand loads having variations under a predefined threshold). Such threshold and number of iterations notably depend on the deployment assumptions of the network slices.

In a possible embodiment, the decision to admit the slice request is based on optimizing a service utility function of the plurality of the network slices, said service utility function being expressed as :

$$\max \sum_{s=1}^{N} U_s(t_1, t_2, \ldots, t_N)$$

and said service utility function being constrained by a constraint function expressed as :

$$\sum_{s=1}^{N} t_s p_s < I$$

where :

- $U_s(t_1, t_2, \ldots, t_N)$ is the slice utility function of the network slice,

- s is an index identifying a network slice among the plurality of network slices,

- $N$ is the number of network slices in the communication network system,

- $p_s$ is the slice demand load for the network slice,

- $t_s$ is the slice service variable of the network slice,

- $I$ is a resource budget parameter set by an application layer of the communication network system, said resource budget parameter being related to a total amount of network resources allocated to the plurality of network slices configured by the application layer.

As a consequence, the proposed admission control method models the slice admission control mechanism as an optimization problem taking notably slice demand loads and slice service variables as defined above into account. The decision on an admission (that is, to admit or deny) an incoming slice request may thus be determined by optimizing a service utility function of the network system taking the resource constraints of such system into account.

By a service utility function, it may be understood a function reflecting an overall utility of the network resources in the overall network system. Such service utility function may for example be understood as the sum of all slice utility functions of the plurality of network slices.

In a possible embodiment, the admission control method further comprises, before step d), :

transmitting a gain check signal to the application layer, such gain check signal comprising data related to a change of at least one slice utility gain considering an updated value of the resource budget parameter.

As a consequence, the proposed admission control method enables to further optimize the slice admission control mechanism by considering a relaxation of the resource constraint of the network system. Indeed, the admission control method proposes to take advantage of a potential elasticity of the application layer for relaxing the budget parameter configured by the application layer for the plurality of network slices.

A further service utility gain may then be considered from relaxing (or changing) such resource budget parameter and an updated value of the resource budget parameter may thus be considered accordingly.

In a possible embodiment, said change of at least one slice utility gain considering the updated value of the resource budget parameter may for example be expressed as :

$$\frac{\partial U}{\partial I} = \lambda$$

with :

$$U = \sum_{s=1}^{N} U_s(t_1, t_2, .., t_N)$$

where :

- $U$ is an overall utility function of the network system,
- $U_s(t_1, t_2, .., t_N)$ is the slice utility function of the network slice,
- s is an index identifying a network slice among the plurality of network slices,
- $N$ is the number of the plurality of network slices in the communication network system,
- $p_s$ is the slice demand load for the network slice,
- $t_s$ is the slice service variable of the network slice,
- $\lambda$ is a (current) value of the load parameter,
- $I$ is a (current) value of the resource budget parameter.

In a possible embodiment, the admission control method further comprises :

based on a response signal received from the application layer, obtaining an updated value of the resource budget parameter between the two successive iterations as :

$$I_{k+1} = I_k + \beta_k \lambda_k$$

where :

- $I_{k+1}$ is the updated value of the resource budget parameter at iteration k+1,
- $I_k$ is the value of the resource budget parameter at iteration k,
- $\lambda_k$ is the value of the load parameter at iteration k,
- $\beta_k$ is a gradient ascent parameter computed at iteration k.

According to another aspect of the present disclosure, it is also proposed a slice controller configured to perform a slice admission control mechanism in a communication network system, said communication network system deploying a plurality of network slices, such slice controller comprising at least:

- a processing unit, and

- a non-transitory computer-readable medium comprising instructions stored thereon, which, when executed by the processing unit, configure the slice controller to perform the admission control method.

According to another aspect of the present disclosure, it is also proposed an admission request method performed by a user equipment for emitting a slice admission request for at least one selected network slice in a communication network system deploying a plurality of network slices, said slice admission request containing at least data related to slice request parameters, the admission request method comprising steps of :

receiving slice demand loads respectively associated to the plurality of the network slices, each slice demand load being related to consumed network resources in the corresponding network slice if the slice admission request is admitted,

based on at least said received slice demand loads, adapting slice request parameters of the slice request, so as to request network resources from the at least one selected network slice of the plurality of network slices, said selected network slice having a corresponding slice demand load below a predetermined load threshold value,

emitting the slice admission request based on said adapted slice request parameters.

As a consequence, the proposed admission request method enables user equipment to be assisted when emitting slice admission requests to a network system. Thus, by receiving at least slice demand loads for the network slices, the user equipment are able to estimate a variation of the network utility, locally assess the slice resource cost for each network slice and select the network slices having the lowest resource cost (that is, the lowest slice demand load) for their transmission (and thus, for determining the demand parameters of their slice admission requests).

According to another aspect of the present disclosure, it is also proposed a user equipment configured for emitting a slice admission request for at least one selected network slice in a communication network system deploying a plurality of network slices, said user equipment comprising at least:

- a user processing unit, and
- a user non-transitory computer-readable medium comprising instructions stored thereon, which, when executed by the user processing unit, configure the user equipment to perform the admission request method.

According to another aspect of the present disclosure, it is also proposed a computer program product comprising program instructions code stored on a computer-readable medium for the execution of the admission control method.

According to another aspect of the present disclosure, it is also proposed a computer program product comprising program instructions code stored on a computer-readable medium for the execution of the admission request method.

According to another aspect of the present disclosure, it is also proposed a non-transitory storage medium readable by a processor, said medium storing a computer program for implementing the admission control method when the program is executed by the processor.

According to another aspect of the present disclosure, it is also proposed a non-transitory storage medium readable by a user processor, said medium storing a computer program for implementing the admission request method when the program is executed by the user processor.

**Brief Description of Drawings**

Other features, details and advantages will be shown in the following detailed description and on the figures, on which:

**Fig. 1**

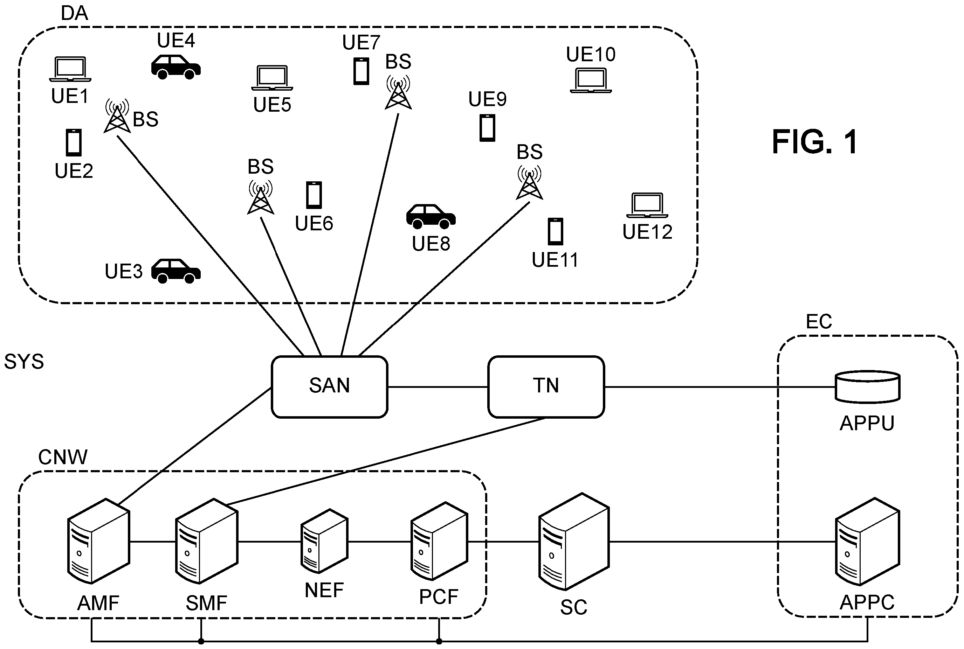

- [Fig. 1] is a schematization of an overall architecture of a 5G wireless communication network.

**Fig. 2**

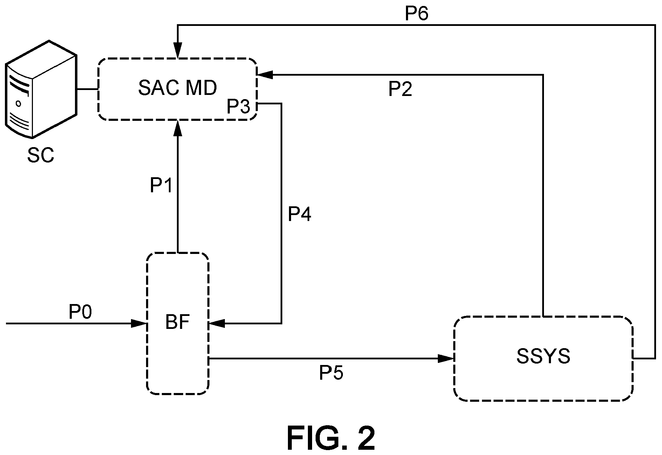

- [Fig. 2] a schematic representation of a slice admission control mechanism.

**Fig. 3**

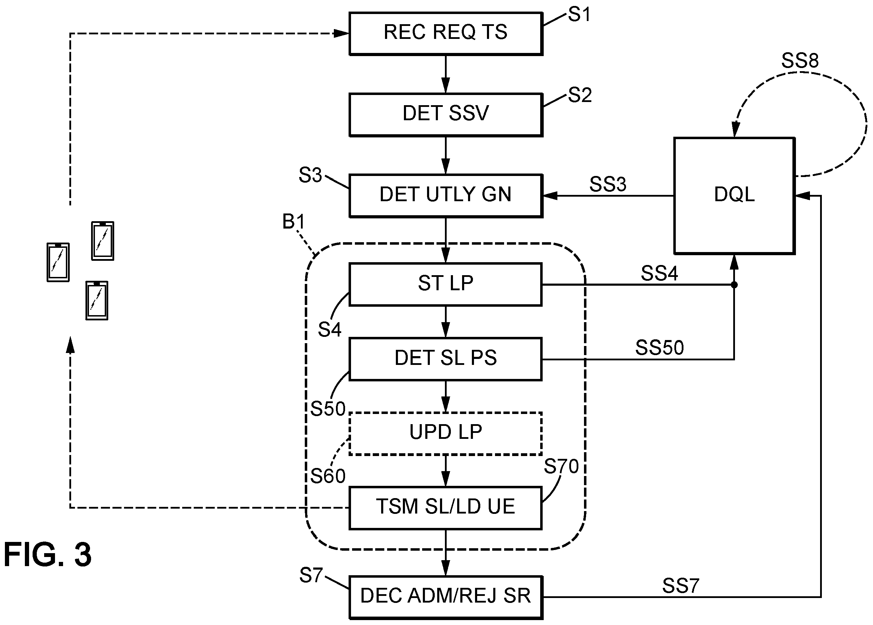

- [Fig. 3] is a flowchart illustrating steps for optimizing the slice admission control policy according to an embodiment of the present disclosure.

**Fig. 4**

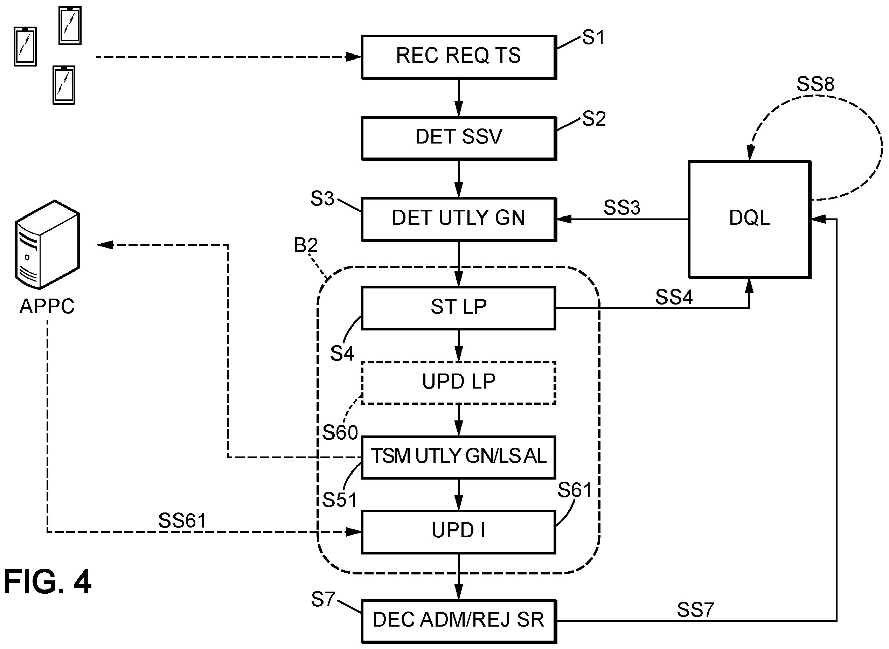

- [Fig. 4] is a flowchart illustrating steps for optimizing the slice admission control policy according to an embodiment of the present disclosure.

**Fig. 5**

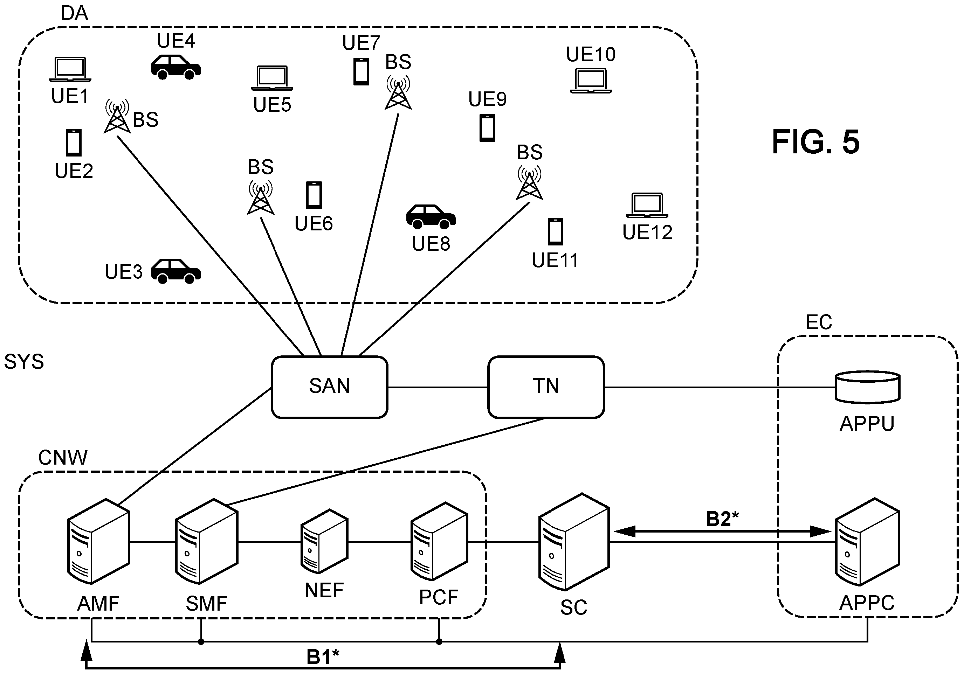

- [Fig. 5] is a functional schematization of the overall architecture of a 5G wireless communication network according to an embodiment of the present disclosure.

**Fig. 6**

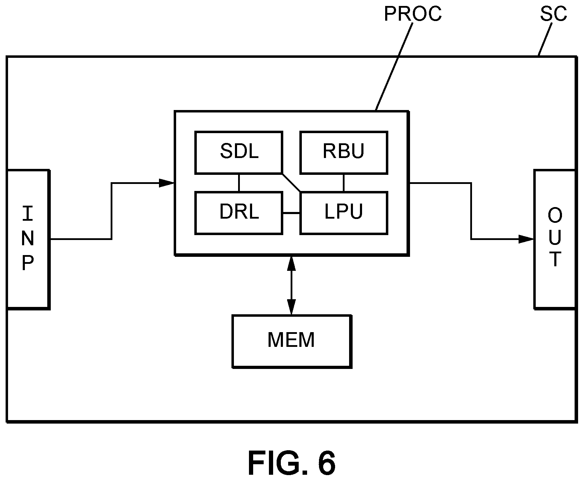

- [Fig. 6] is a structural schematization of a slice controller according to an embodiment of the present disclosure.

**Fig. 7**

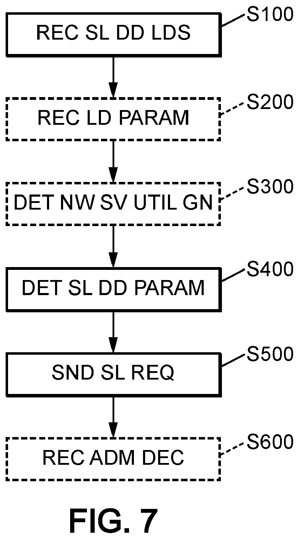

- [Fig. 7] is a flowchart illustrating steps for emitting a slice request according to an embodiment of the present disclosure.

**Description of Embodiments**

It is referred to figure 1. Figure 1 schematizes a wireless communication network system SYS. In particular, such system SYS is defined in the context of a Fifth Generation (or 5G) wireless network. The system SYS architecture is mainly composed by distinct layers, including an infrastructure layer, a control layer and an application layer.

The infrastructure layer notably comprises the deployment area DA which is composed by a plurality of network equipments forwarding the data and resources of the network system SYS. Such network equipments notably include 5G access network base stations BS forming a radio access network (or RAN). Such RAN is able to forward data and signals between the user equipment (or UEs) UE1-UE12 and the application layer user plane APPU using the shared access network SAN and the transport layer TN that are both configured by the 5G core network layer CNW.

The 5G core network CNW is part of the control layer, which notably enables data forwarding, resource arrangement, network topology control, information collection in the network system SYS and transport network TN configuration and setup. In particular, the core network CNW manages the shared access network SAN in the deployment area DA. Such shared access network SAN management is performed by the access and mobility management function AMF of the core network CNW. Such function AMF notably ensures the access of the user equipment UE1-UE12 to the 5G base stations BS, performs resource allocation and mobility management for the deployment area DA. Session parameters over the transport network TN are controlled by the session management function SMF and coordinated with the resource allocations and mobility management provided by the access and mobility management function AMF.

The application layer contains a plurality of application services which uses the resources of the network system SYS that are determined by the core network CNW and exposed by a network exposure function NEF to the application control function APPC. The exposition of the resources by the network exposure function NEF to the application control function APPC may notably refer to the transmission of resources to the application control function APPC for cloud type management purposes. For example, the network exposure function NEF may map resources of the shared access network SAN and the transport network TN to cloud resources such as networking resources, storage resources, computation resources. The cloud resources are essentially virtual machine (or VM) resources. The application layer is essentially an application server APPU that collects and/or transmit application-related data from the deployment area DA and application layer control function APPC and which is responsible for determining the service requirements of application services (and thus of UEs) running on the network system SYS. Such services requirements define parameters of application layer communications between the application server APPU and user equipment UE1-UE12 in the deployment area DA. Such parameters may for example include the application layer throughput, the application layer latency, the application layer service reliability or any other parameters that may describe the application layer communication in the deployment area DA. The application layer server APPU and application layer control function APPC are located in an edge network EC where the application layer control function APPC may host application control function for a plurality of applications.

The user plane (i.e., the application server) APPU of the application layer is connected to the infrastructure layer while the control plane (i.e., the application layer control function) APPC uses the resources information exposed by the network exposure function NEF and determined by the core network CNW.

In the context of the present disclosure, the network system SYS is notably supported by Software Defined Network (or SDN) and Network Function Virtualization (NFV) architectures. In particular, the joint use of SDN and NFV enables the 5G network system SYS to abstract a plurality of independent virtual networks based on the single aforementioned physical infrastructure of the network system SYS. Such architectures notably enable the deployment and management of a plurality of network slices. Such virtual network splitting is referred to as network slicing. As a result, the present disclosure considers that the deployment of the 5G wireless communication network system SYS involves the deployment and management of a plurality of network slices.

Each network slice thus refers to an independent virtual end-to-end network which resource allocation and process optimization enable to provide specific and tailored service types. Network slicing thus enables the network system SYS to tailor network functions so as to efficiently support a wide range of service types with various quality of service (or QoS) requirements using a single physical infrastructure and a common pool of physical resources, as aforementioned. Each network slice uses part of the radio access network and deploys tailored network functions to ensure the transport and support of slice-related data and control packets with slice-specific QoS requirements.

Some network slices may be designed to support enhanced mobile broadband (or eMBB), such as high-speed, high bandwidth applications. Other network slices may be designed to support massive machine type communications (or mMTC) such as IoT use cases. Other distinct network slices may support ultra-reliable and low-latency communications (or URLLC) such as critical infrastructure communications. Referring to figure 1, a plurality of user equipment UE1-UE12 is deployed on the 5G network system SYS using different network slices. For example, user equipment UE1, UE5, UE10, UE12 may be supported by a common first (network) slice targeted to support massive broadband applications. For example, such user equipment UE1, UE5, UE10, UE12 may have a common service type - high definition video streaming for example - and thus similar QoS requirements (notably regarding throughput). User equipment UE2, UE6, UE7, UE9, UE11 may be supported by a common second (network) slice different from the first slice, such second slice being targeted to support massive communications. For example, such user equipment UE2, UE6, UE7, UE9, UE11 may have a common service type - remote monitoring or communication for example - and thus common QoS requirements (notably regarding energy efficiency and UE density). User equipment UE3, UE4 and UE8 may be supported by a common third (network) slice different from the first and second slices, such third slice being targeted to support ultra-reliable and low-latency communications. For example, such user equipment UE3, UE4, UE8 may have a common service type - driving assistance for example - and thus common QoS requirements (notably with high reliability, fastness of response and security levels required). The capabilities provided by each network slice thus depend on the service class of such network slice, that is, on the service type that the network slice intends to serve in terms of technical performance (such as delay, throughput, service continuity, speed, security etc.).

The plurality of (network) slices that are concurrently operated on the same network infrastructure thus implies heterogeneous specifications of resources and network functions for the different slices. Such slice specifications are notably managed by the application layer APPC.

The 5G wireless communication network system SYS receives user requests (or demands) for supporting various service types required by various user equipment of the network system SYS. Such user requests are equivalently processed by the system SYS as slice requests aiming to be allocated network slices with corresponding network resources. For example, the user request may refer to a request for a given throughput in a given network slice. In order to avoid conflicts of resource access within the network system SYS, incoming user requests are scheduled and processed by the network system SYS. To that end, the network system SYS deploys a slice admission control mechanism (or policy) in order to decide on admitting or refusing each incoming slice request. Such slice admission control policy is performed by a slice controller SC of the system SYS. The slice admission control policy aims at optimizing the overall network performance on the long term by satisfying the requirements of as many services and user equipment as possible while taking into account the available resources of the system SYS, the capabilities of the system SYS as well as the specifications to be fulfilled of the user equipment already served by the slices.

It is now referred to figure 2. Figure 2 schematizes a slice admission control mechanism performed in a 5G communication network system SYS. Such network system SYS is for example illustrated on figure 1. The slice admission control mechanism may be performed by the slice controller SC of such system SYS.

The aim of the slice admission control mechanism is to determine a long-term optimal policy in the slice request allocation. In other words, the slice admission control mechanism consists in the slice controller SC deciding to admit or refuse each incoming user slice request so as to maximize a network utility function. Such network utility function may notably be generically defined as :

$$Q = G_{adm} - L_{del}$$

with :

- $G_{adm}$ being the overall utility gain of the system SYS by admitting the received slice request, and
- $L_{del}$ being the buffering cost of the system SYS, that is, the cost of maintaining the buffering of the received slice request, for example by refusing to allocate resources to the received slice request, and thus of increasing the service delay.

To that end, the slice admission control mechanism may be modelized as a Markov Decision Process (MDP) in the environment of the 5G communication network system SYS, as schematically represented on figure 2.

In a step P0, the network communication system SYS receives an incoming user request. Such incoming user request may be received by a request buffer BF of the system SYS. In an embodiment, the request buffer BF may be part of the slice controller SC. The request buffer BF stores the incoming user request. In particular, such incoming user request may be stored following a queue model. The user requests are buffered by the request buffer BF so that such requests are processed by the slice controller SC in an order of arrival of the incoming user requests. The request buffer BF may also pre-process the incoming user requests based on the service types and the Quality of Service (or QoS) requirements of such requests. The request buffer BF may thus convert the incoming user requests into slice requests. In other words, the request buffer BF may sort the incoming user requests based on the network slices and the corresponding network resources to be allocated to such requests. The request buffer BF may buffer such slice requests in one or several queues, depending for example on the requested services. In the rest of the description, "user request" and "slice request" will be used interchangeably.

In a step P1, the slice controller SC receives information related to the buffered slice requests from the request buffer BF. Such information may be timestamped. Such information may include batches of user requests and be received periodically according to a preconfigured period. Such information may also include different requests queues and may be received by the slice controller SC according to different preconfigured periodicities. Moreover, such information may include a buffer status indicating the number of buffered slice requests or a level of queue length. Such number of buffered slice requests may be indicated per queue. Such information may include data related to each buffered slice request. Such data related to each buffered slice request may for example include :

- data related to an arrival time of each incoming slice request,

- data related to a buffering time of each buffered slice request (that is, a time at which each slice request was buffered by the request buffer BF),

- data related to latency requirements (or equivalently, to a level of delay-tolerance) of each buffered slice request.

Based on such information received from the buffer BF associated with a considered time, the slice controller SC is notably able to determine the buffering cost $L_{del}$ of the system SYS associated to such time. In other words, based on the timestamped information received from the request buffer BF, the slice controller SC is able to quantify the service delay, that is, the queuing delay of the system SYS by having the incoming slice requests buffered in the request buffer BF and waiting to be processed by the slice controller SC. Such buffering cost $L_{del}$ may also be directly determined by the request buffer BF and transmitted to the slice controller SC at step P1.

At a step P2, the slice controller SC receives network information related to a current state of the communication network system SYS. Such network information may notably be provided by a network sub-system SSYS. Such sub-system SSYS notably manages the radio access network of the system SYS in the transporting and sharing of resources to the deployment area DA of the system SYS. Such sub-system SSYS notably shares resources of the system SYS to the different services currently supported by the network slices of the network system SYS. Such sub-system SSYS may for example includes the core network CNW, the edge computing EC, the shared access network SAN and the transport network TN of the system SYS.

Such network information may be timestamped (or associated to a current time) and may for example relate to :

- an available amount of overall resources in the system SYS (in terms of resource blocks for example), at the current time and/or at times preceding the current time,

- an available amount of slice resources of the system SYS in different network slices, at the current time and/or at times preceding the current time,

- the service types and requirements currently fulfilled by the system SYS, at the current time and/or at times preceding the current time, and/or

- the current values of QoS parameters (such as latency, reliability, throughput...) in each network slice, at the current time and/or at times preceding the current time.

Such step P2 may notably be performed concurrently to step P1, so that the information received about the resource state of the network system SYS and about the request buffer BF have (or are associated to) similar or close timestamps.

Based on such information received from the sub-system SSYS and from the request buffer BF, the slice controller SC is able to obtain observed information relating to at least a current state of the network system SYS.

At step P3, the slice controller SC, based on the information related to the buffered slice requests received at step P1 and the information related to at least a current state of the network system SYS received at step P2, that is, based on a current state of the network system SYS, processes an incoming slice request currently buffered in the request buffer BF. The slice controller SC may process the incoming slice requests following a first-in-firstout (or FIFO) processing of the queues in the request buffer BF. The slice controller SC may process the incoming slice requests depending on request parameters or priority levels of the incoming slice requests. In particular, the processing of an incoming slice request consists in determining a decision (or an action) a to admit or reject the received slice request. Such determination of the action a to admit or reject the received slice request may be performed by a slice admission control module SAC MD included in the slice controller SC.

The decision a to admit or reject the processed incoming slice request is notably associated to the current state of the network system SYS as observed by the slice controller SC based on steps P1 and P2. The determination of such decision a may notably rely on reinforcement learning-based algorithms or deep reinforcement learning-based algorithms run by the slice admission control module SAC MD. Such learning algorithms leading to the decision a taken in response to a current state will be detailed further in the description.

At a step P4, the decision a of the slice controller SC is transmitted to the request buffer BF. If the decision a of the slice controller SC is to admit and thus serve the processed slice request, the request buffer BF may be updated in that the admitted slice request is removed from the queue of the request buffer BF and the buffer status of the request buffer BF is updated accordingly. Yet, if the decision a of the slice controller SC is to reject the slice request, the request buffer BF may keep the processed slice request in the queue of the request buffer BF. The buffer status of the request buffer BF may also be updated (for example by increasing the buffering time of the refused slice request). The buffering cost $L_{del}$ may also increase.

At a step P5, at least the decision a of the slice controller SC to admit or refuse the processed slice request is transmitted to the sub-system SSYS in order to update the current state s of the network system SYS. Such decision a may be transmitted to the sub-system SSYS by the request buffer BF or by the slice controller SC. The request buffer BF may also send, at step P5, data related to the processed slice request. The decision a taken by the slice controller SC may impact the overall state and/or the utility of the network system SYS. Indeed, if the decision a of the slice controller SC is to admit the processed slice request, the sub-system SSYS manages to allocate resources of at least one network slice allocated to the admitted slice request. In such case, the available amount of resources in the network slices changes and leads to a new overall state of the network system SYS. In particular, the utility gain $G_{adm}$ of the network system SYS increases due to the decision a to admit the processed slice request.

At a step P6, the decision a determined by the slice controller SC at step P3 leads to a reward r triggered by the sub-system SYS. Such reward r is transmitted to the slice controller SC (or to the slice admission control module SAC MD). In particular, the reward r results from the action a taken by the slice controller SC in response to the state st of the network system SYS. Such reward r may for example be a positive integer value if the decision a is to admit the processed slice request and be a null or negative integer value if the decision a is to refuse the processed slice request. In particular embodiments, the reward r may be different depending on the data related to the processed slice request. For example, if the processed slice request requires a high-priority service type or has strict Quality of Service requirements, its admission will lead to a higher reward r value compared to the admission of a more delay-tolerant slice request for example.

Steps P0 to P6 illustrate one iteration of the slice admission control mechanism as performed by the slice controller SC, and notably by the slice admission control module SAC MD. Such iteration thus consists, at a given time t and in response to a current state st of the network system SYS, to decide on an action a to admit or reject an incoming slice request, such action a generating a reward r.

More generally, the Markov Decision Process of the slice admission control mechanism performed by the slice controller SC in a 5G communication network system SYS may be modelized by :

- a state space S of the network system SYS, which is understood as a set of all possible states st of all network slices of the network system SYS at a given time. For example, possible available amounts of resources in the network slices, possible values of throughputs, latencies, reliability and/or any other Quality of Service parameters in all network slices measured at a given time may form a set of all possible states st of the network system SYS. In the context of the present disclosure, the state space S is considered to be finite or infinite.

- an action (or decision) space A of the slice controller SC, which is understood as a set of decisions possibly taken by the slice controller SC. In the context of the present disclosure, the action space A may for example have a dimension (or size) equaling 2. The action space may comprise Boolean or integer values respectively corresponding to admitting or rejecting an incoming slice request.

- reward values r, which are understood as gain or loss values obtained by the slice controller SC subsequently to an action a taken in response to a given state st.

The slice admission control mechanism consists in performing several iterations of steps P0 to P6 in order to maximize the network utility function Q. In particular, at each iteration, considering a state st and a subsequently-taken action a, the network utility function Q is updated : the utility gain $G_{adm}$ may vary (for example, the utility gain $G_{adm}$ increases when a positive reward r value is obtained) and/or the buffering cost $L_{del}$ may vary (for example, the buffering cost $L_{del}$ increases when a processed slice request is refused).

The slice admission control mechanism notably consists in updating the network utility function Q based on a learning process of the states st and subsequent actions and rewards respectively associated to such states st.

In a first embodiment, the slice admission control mechanism uses reinforcement learning-based algorithms and notably Q learning-based algorithms. A furthermore detailed description of reinforcement learning algorithms is for example provided in the following prior art document: "Application of Deep Reinforcement Learning in Communications and Networking : A Survey", Nguyen, Dinh et al. (Part II, section B).

In particular, the slice admission control mechanism using reinforcement learning (or more specifically, Q learning) consists in exploring a table, also referred to as a Q-table, covering all pairs of states and actions (st,a) occurring in the system SYS. Each pair of state and action (st,a) occurring in the system SYS is associated to a maximized utility function Q obtained by iterating the learning throughout time. More precisely, at a given time t+1, corresponding for example to a time a new slice request is received (in other words, when a second iteration of steps P0 to P6 occurs), the network utility function Q for a given pair of state and action (st,a), also referred to as a Q-value, is updated as :

$$Q_{t+1}(st, a) = Q_t(st, a) + \alpha_t[r_t(st, a) + \gamma max_b\{Q_t(st, b)\} - Q_t(st, a)]$$

with :

- $Q_{t+1}(st, a)$ referring to a value of the network utility function of the system SYS at a time t+1 for the pair of state and action (st,a),

- $Q_t(st, a)$ referring to a value of the network utility function of the system SYS at a previous time t for the pair of state and action (st,a),

- $r_t(st, a)$ is the reward obtained from the action a taken by the slice controller SC for a state st of the system S at time t,

- $\alpha_t$ referring to a value of learning rate for at time t. The learning rate $\alpha_t$ determines the speed of learning of the slice admission control mechanism,

- **y** referring to the discount factor of the reinforcement learning algorithm. Such discount factor **y** reflects a correlation of the updated value of the service utility function at time t+1 with the previous values of service utility function at previous time t.

Times t and t+1 may notably correspond to two successive iterations time slots of steps P0 to P6 (that is, two successive iterations times of the Q-learning scheme).

The learning rate $\alpha_t$ and the discount factor **y** initial values may be predefined or preconfigured in the slice admission control module SAC MD.

As a consequence, after exploring all pairs of states and actions (st,a) of the Q-table, the slice admission control mechanism may obtain a mapping of all states of the network system SYS in the state space, notably when all Q-values converge or after a number of iterations of steps P0 to P6. The Q-values obtained by reinforcement learning thus provides an optimal policy for slice request allocation. Thus, when the slice controller SC receives a new slice request at a time T, the slice controller SC is able to determine the mapped action a* to reject or admit such incoming slice request based on the observed state s* of the network system SYS at time T, so as to maintain or reach the optimal Q-value $Q_T(st*, \alpha*)$.

In a second embodiment, the slice admission control mechanism uses deep reinforcement learning-based algorithms and notably deep Q learning-based algorithms (or DQL algorithms). A furthermore detailed description of deep reinforcement learning algorithms is for example provided in the following prior art document : "Application of Deep Reinforcement Learning in Communications and Networking : A Survey", Nguyen, Dinh et al. (Part II, sections D, E).

Th slice admission control mechanism using deep reinforcement learning-based algorithms consists in implementing a Deep Q-Network (or DQN) instead of a Q-table to maximize the network utility function. Such mechanism thus consists in performing a combination of reinforcement learning with deep learning.

Reinforcement learning implies the exploration and learning of the Q-table in order to maximize, for each pair of state and action (st,a), the value of the network utility function Q. Yet, the computational complexity of such exploration depends on the size and/or the complexity of the state S and action A space of the system SYS. In the case of large action A and state S spaces for instance (e.g., for a state space and/or an action space with a dimension above ten), the slice admission control mechanism using reinforcement learning may not be able to determine an optimal policy of slice admission control in a reasonable time (e.g., below a thousand iterations of the Q-learning scheme). In other words, the convergence time of reinforcement learning algorithms for the slice admission control mechanism may be slow.

Moreover, Q learning often leads to biases in the action determined to be optimal considering a pair of state s and action a, notably due to the fact that the samples of states and actions used to estimate the optimal action are the same as the samples of states and actions used to determine each action value at each iteration.

Thus, deep reinforcement learning may be performed using a replay memory in order to replay the states and actions as well as the subsequent rewards obtained by the network system SYS. Moreover, deep reinforcement learning may be performed by training two distinct neural networks (and thus, two distinct Q-value functions) in order to simultaneously select and evaluate the actions taken at each iteration. Such approach is notably referred to as double deep Q-Learning.

It is now referred to figure 3. Figure 3 is a flowchart representing steps for performing a slice admission control mechanism in an embodiment proposed by the present disclosure.

The slice admission control mechanism as performed by the slice controller SC relies on admission decisions to the UEs slice request so as to maximize an overall utility function providing a constrained environment of the 5G communication network system SYS. Indeed, the network system SYS is constrained by a constraint function depending notably on the available amount of resources in the network slices, the service parameters, the specifications and service requirement parameters set by the edge computing level EC.

Existing slice admission control mechanisms use reinforcement learning and deep reinforcement learning-based algorithms in order to maximize the network utility function Q. Yet, the computational complexity as well as the convergence time of such learning algorithms remain major issues in slice admission control mechanisms, notably due to :

- the unpredictable and random nature of the incoming user requests (e.g., a user request to access a network slice with a specific throughput) assumed in existing slice admission control mechanisms, and

- the fixed constraint function to be respected.

In the context of the present disclosure, the 5G communication network system is supposed to comprise N network slices. Such network slices may serve different service types, such service types potentially having different priorities, Quality of Service requirements in terms of latency, throughput, reliability for example. The different network slices are allocated corresponding resources. User equipment UE1-UE12 transmit user requests to the network system SYS. Such user requests may notably refer to demands for traffic (or throughput) in one or several network slices, depending on the data packets to be transmitted in the context of the services required by the user equipment UE1-UE12. For example, user requests transmitted to the slice controller SC of the network system SYS (or to the request buffer BF) may be :

- periodic requests requiring a minimum level of throughput and/or a maximum level of tolerance for latency and/or a minimum level of reliability for the data packets to be transmitted over the network system SYS, or

- punctual and specific requests with specified Quality of Service parameters.

Considering such incoming user requests, the present disclosure defines slice service variables $t_s$ parameters respectively associated to each of the network slices of the network system SYS. In other words, for any index value s comprised between 1 and N, a slice service variable $t_s$ is associated to network slice s. The slice service variable $t_s$ may for example refer to the overall throughput that is demanded by users over the network slice s. In other words, $t_s$ may refer to the sum of the throughputs of the user equipment that accessed the network slice s. In another embodiment, the slice service variable $t_s$ could be the sum of the throughputs respectively requested by user equipment that are requesting the access to the network slice s. In yet another embodiment, the service slice variable $t_s$ is the average of the throughput of the user terminals that accessed the network slice s or the average requested throughputs of the user terminals that are requesting the access to the network slice s. The slice service variable $t_s$ may be understood, more generally, as a parameter reflecting the updated state and the Quality of Service parameters (such as throughput, reliability, security, latency...) that may be offered by the corresponding network slice s, if such network slice is allocated to the incoming user requests.

In the case of an incoming slice request demanding traffic in one or several network slices, the slice service variables $t_s$ may be understood as the sum of the throughput offered by at least one network slice in the deployment. In other words, the slice service variables $t_s$ are parameters reflecting an impact of the incoming slice requests on the Quality of Service parameters provided by the respective network slices.

As a consequence, the service utility function of the network system SYS to be maximized by the slice controller SC when performing the slice admission control mechanism may be defined as the following multi-variate function :

$$\sum_{s=1}^{N} U_s(t_1, t_2, \dots, t_N)$$

where :

- N is the number of network slices considered in the network system SYS,
- s is an index identifying the network slices, s being comprised between 1 and N,
- $U_s$ is the slice utility function associated to network slice s,
- $t_1, t_2, \dots t_n$ are the slice service variables respectively associated to network slices 1,...N.

Such service utility function to be maximized represents an overall utility function of the network system SYS, that is, for all network slices of the system SYS. In other words, such service utility function represents an average service gain obtained from the different user requests received by the network system SYS.

In particular, the utility function $U_s$ of each network slice s is expressed as :

$$U_s(t_1, t_2, \dots, t_N)$$

Considering a network slice s, an example of such utility function $U_s$ may be expressed as :

$$U_s(t_1, t_2, \dots, t_N) = \sum_{k=1}^{N} \omega_k \log(1 + t_k)$$

Where :

- $t_1, t_2, \dots, t_N$ refer to respective slice service variables associated to network slices 1,...N,

- $U_s(t_1, t_2, \dots, t_N)$ refers to the utility function of network slice s,

- $\omega_k$ refers to a slice type parameter associated to a network slice k. Such slice type parameter $\omega_k$ may for example be higher for network slices serving higher priority services.

The present disclosure also proposes to introduce slice demand load $p_s$ parameters. The slice demand load $p_s$ may refer to an estimated impact of the demand of the users on the network slice s, such user demand being for example expressed by the slice service variable $t_s$ on the resources consumption of the network slice s. In other words, the slice demand load $p_s$ may be understood as the estimated load over the network slice s that results if the demands of all the users, which generate a combined throughput (or slice service variable) of $t_s$, over the network slice s is accepted. The higher the slice demand load $p_s$ on the network slice s, the higher the resource consumption of the user request expressed by the means of the slice service variable $t_s$. Similarly, the lower the slice demand load $p_s$ on the network slice s, the lower resource consumption of the user request expressed by the means of the slice service variable $t_s$.

In other words, for a given network slice s, the slice demand load $p_s$ may be understood as a resource cost of admitting a considered incoming slice request in the network slice s. Thus, a network slice s having a high value of slice demand load $p_s$ reflects a network slice consuming a high amount of network resources with respect to another network slice s' having a lower value of slice demand load $p_{s'}$. If a network slice s does not serve the incoming slice request, then its corresponding slice demand load $p_s$ is null. A resource-hungry network slice (for example, due to the resource-hungry services such network slice serves) may cause resource shortage to other services served by other network slices if incoming user requests are being allocated resources for such resource-hungry network slice. The slice demand load $p_s$ of any network slice may be defined as an amount of physical resource blocks per slice service variable $t_s$ unit. For example, if the service served by a network slice is to provide throughput to data packets, the considered slice service variable $t_s$ for the network slice is throughput and the slice demand load $p_s$ is an amount of physical resource block cost to the system SYS per throughput unit in such network slice. The slice demand load $p_s$ of each network slice may notably depend on the buffer status, an access network status and/or a transport network status regarding resources of each network slice.

The network system SYS, and more particularly the application layer (here, the control plane of the application layer APPC) sets a total amount of resources allocated to the different network slices. Such total amount of resources may be referred to as a resource budget I parameter. The application control function APPC may for example set parameters deriving to an amount of throughput for the network slices. The application control function APPC may then transmit such parameters to a Pivotal Cloud Foundry PCF of the core network CNW. Such Pivotal Cloud Foundry PCF may further transmit such parameters to the access and mobility management function AMF and the session management function SMF, resulting in session and access resources.

The resource budget I may thus be understood as cloud or processing resources for example. The resource budget I parameter thus refers to an amount of physical resource blocks reserved for the network slices at the edge computing EC level.

In particular, when the network system SYS receives an incoming slice request, the slice admission control mechanism is performed by the slice controller SC taking into account the following constraint function :

$$\sum_{s=1}^{N} t_s p_s < I$$

where:

- $p_s$ is the slice demand load of network slice s,
- $t_s$ is the slice service variable of network slice s,
- I is the resource budget allocated to all network slices of the system SYS,
- N is the number of network slices in the system SYS.

As aforementioned, the slice demand load $p_s$ of network slice s may be understood as the resource load introduced by incoming demands. The slice service variable $t_s$ may be understood as the throughput of the network slice s that is shared by the user equipment that are requesting resources from the network slice s. The resource budget I may be understood as the overall throughput available within the whole network system SYS.

For example, at an initial time of the slice admission control mechanism (e.g., the start of the slice admission control mechanism as disclosed), initial values of the slice service variables $t_s$ are set to be equal at $t_1 = t_2 = \cdots = t_N = \frac{I}{N}$ and initial values of the slice demand loads $p_s$ are set to be equal at $p_1 = p_2 = ... = p_N = \alpha$ < 1. At each iteration of the slice admission control mechanism and/or for example after each admission of a slice request, such slice demand loads $p_s$ and slice service variables $t_s$ are updated. In particular, such update depends on the derivatives of the utility functions $U_s$ associated to each network slices s. Such utility functions $U_s$ being predictable or estimated using a model learning algorithm such as a (deep) reinforcement learning algorithm, the slice demand may be predicted using such learning algorithm, which enables the overall slice admission control mechanism to use only one model learning algorithm for the predicting a future state and parameters of the network system SYS.

As a consequence, in the context of the present disclosure, the slice admission control mechanism may be modelized as the following constrained optimization problem :

$$\max \sum_{s=1}^{N} U_s(t_1, t_2, ..., t_N)$$

under the following constraint function :

$$\sum_{s=1}^{N} t_s p_s < I$$

where :

- N is the number of network slices in the network system SYS,
- $t_s$ refers to the slice service variable of the network slice s (s is comprised between 1 and N),
- $U_s(t_1,t_2,...,t_N)$ refers to the utility function of network slice s,
- $p_s$ refers to the slice demand load of the network slice s,
- I refers to the resource budget of the application layer APPC of the system.

Indeed, such optimization problem is to be considered by the slice controller SC when processing each received user request in order to quantify the gain (or loss) in the overall performance of the network system SYS, should the incoming user request be admitted by the slice controller SC.

Such optimization problem is to be solved at each iteration of the slice admission control mechanism. To that end, a Lagrange approach using the Kuhn-Tucker conditions may be used. The Lagrange function L may thus be defined as the following :

$$L(t_1,t_2,t_3,...,t_N) = \sum_{s=1}^{N} U_s(t_1,t_2,t_3,...,t_N) + \lambda \left( I - \sum_{s=1}^{N} p_s t_s \right)$$

where :

- L is the Lagrange function,
- $t_1,t_2,t_3,...,t_N$ are the slice service variables associated to the respective network slices 1,..N,
- $U_s$ is the utility function of the network slice s,
- $p_s$ is the slice demand load of network slice s,
- I is the resource budget allocated to all network slices of the system SYS,
- N is the number of network slices in the system SYS,
- $\lambda$ is a load parameter corresponding to a Lagrange multiplier associated to the constraint function.

The maximization of the utility function $U_s$ under the constraint function is obtained at specific values of the slice service variables $t_s$ providing that such specific values verify, for any index value s comprised between 1 and N, :

$$\frac{\partial}{\partial t_s} L(t_1,t_2,t_3,...,t_N) = 0$$

In the context of the present disclosure for solving the aforementioned optimization problem, the slice utility function $U_s$ of a network slice s is approximated as a function depending on the slice load parameter $t_s$ associated to such network slice s. In particular, it is approximated that the maximum of the derivative of the slice utility function $U_s$

(that is, the utility gain for network slice s) is reached for $\dfrac{\partial U_s}{\partial t_s}$ . In other words, it is approximated that, for any network slice s :

$$\frac{\partial U_s}{\partial t_s} \gg \frac{\partial U_s}{\partial t_{k \neq s}}$$

Thus, the optimization problem may be expressed as :

$$\frac{\partial}{\partial t_s}(U_s(t_1, t_2, t_3, \dots, t_N)) - \lambda p_s = 0$$

$$\rightarrow \frac{\partial}{p_s \partial t_s}(U_s(t_1, t_2, t_3, \dots, t_N)) = \lambda$$

The value $\frac{\partial}{\partial t_s}(U_s(t_1, t_2, t_3, \dots, t_N))$ corresponds to the gradient (that is, a variation) of the utility function of network slice s, providing that the incoming user request is admitted by the slice controller SC and allocated to slice s. In other words, such gradient value represents either a gain (when $\frac{\partial}{\partial t_s}(U_s(t_1, t_2, t_3, \dots, t_N))$ is positive) or a loss (when $\frac{\partial}{\partial t_s}(U_s(t_1, t_2, t_3, \dots, t_N))$ is negative) obtained by the network system SYS.

In particular, when the optimization problem is solved considering all network slices (that is, considering the gradient values of the utility function obtained for all slice service variables $t_1, t_2, t_3, \dots, t_N$, the ratio between such gradient value and the corresponding slice demand load is constant and corresponding to the load parameter $\lambda$.

The slice demand load $p_s$ of any network slice m may thus be expressed as :

$$p_s = \frac{\partial}{\lambda \partial t_s}(U_s(t_1, t_2, t_3, \dots, t_N))$$

Furthermore, the load parameter $\lambda$ can also be expressed as :

$$\frac{\partial}{\partial I}L(t_1, t_2, t_3, \dots, t_N) = \lambda$$

In other words, the load parameter $\lambda$ quantifies the impact of modifying the resource budget I (for example by relaxing or restraining the resource budget I set by the application layer APPC for the network slices) on the utility gain or loss of the network system SYS. Thus, when solving the optimization problem at a given iteration of the slice admission control mechanism, the slice controller SC is able to obtain an overall gain or loss of utility of the network system SYS considering a relaxation of the constraint function $\sum_{s=1}^{N} t_s p_s < I$. The load parameter $\lambda$ then represents a cost in relaxing such constraint function so as to increase the utility gain of the network system SYS when admitting the user request.

In particular, the load parameter $\lambda$ may be used in order to determine the slice demand load $p_s$. Such load parameter $\lambda$ may notably be updated based on the difference between the amount of resources associated to the admitted requests and the current resource budget I of the network system SYS.

The steps for performing a slice admission control mechanism according to an embodiment of the present disclosure, as represented on figure 3, are now detailed. In such embodiment of the present disclosure, the slice controller SC notably optimizes the slice admission control mechanism by shaping the incoming user requests. Such user request shaping aims to address the shortcomings of existing slice admission control mechanisms, notably the unpredictable and random nature of the user requests received by the slice controller SC.

At a step S1, the slice controller SC receives at least one user request from at least one user equipment deployed in the network system SYS. Such step S1 may for example correspond to steps P0 and P1 of figure 2. In particular, the slice request includes data related to slice request parameters, referring to the service parameters as well as the Quality of Service parameters required by the user equipment. For example, the user request received at step S1 may include a throughput required by the user.

At a step S2, the slice controller SC determines values of the slice service variables $t_1, t_2, t_3, \dots, t_N$ for all network slices. Such values of slice service variables $t_1, t_2, t_3, \dots, t_N$ may notably be obtained based on the slice request parameters related to the user requests received at step S1 and on measures related to the states and the available amounts of resources of the network slices.

At a step S3, the slice controller SC determines the utility functions $U_s$ of all network slices s (s being for example comprised between 1 and N, N being the number of network slices). In particular, the slice controller SC determines the value of the gradient of such utility functions $U_s$ so as to obtain utility gain (or loss) functions $\frac{\partial}{\partial t_s}(U_s(t_1, t_2, t_3, \ldots, t_N))$ of each network slice, would such network slice admit the user request. Such utility gain $\frac{\partial}{\partial t_s}(U_s(t_1, t_2, t_3, \ldots, t_N))$ is notably determined (or obtained) by the slice controller SC using, at step SS3, data trained by a machine learning model DQL such as a deep reinforcement learning model. In other words, a machine learning model is used to estimate (or predict) the derivative of the utility function $U_s$ to be optimized.

In a block step B1, the slice controller SC proceeds to determine a slice demand load scheme in order to shape the incoming user requests. To that end, the slice controller SC obtains a value of the load parameter $\lambda$ at a step S4. If the slice admission control mechanism is performed by the slice controller SC at a first (or initial iteration), an initial value $\lambda_{k=0}$ of the load parameter $\lambda$ may be set or pre-configured by the slice controller SC and/or by the application control function APPC for example. Such initial value $\lambda_{k=0}$ may for example be set at $\lambda_{k=0} = 1$. If an existing $\lambda_{k>0}$ value of the load parameter $\lambda$ is stored by the slice controller SC, for example in a storage memory MEM of the slice controller SC (notably if a previous iteration k of the slice admission control mechanism has already been performed), the slice controller SC may use such value of the load parameter $\lambda$. At a step SS4, such used value of the load parameter $\lambda$ may be fed to the deep reinforcement learning model DQL.

At a step S50, the slice controller SC determines values of the slice demand loads $p_1, p_2, p_3, \ldots, p_N$ for the different network slices as the utility function variation with respect to each slice service variable $t_1, t_2, t_3, \ldots, t_N$ divided by the value of the load parameter $\lambda$ set at step S4. In other words, for any index s comprised between 1 and N, the slice demand load $p_m$ of network slice indexed s is determined by the slice controller SC as :

$$p_s = \frac{1}{\lambda} \times \frac{\partial U_s}{\partial t_s}(t_1, \ldots, t_N)$$

where :

- $\lambda$ is the load parameter obtained at step S4,
- $\frac{\partial U_s}{\partial t_s}(t_1, \ldots, t_N)$ is the utility function variation with respect to slice service variable $t_s$ and obtained at steps S3 and SS3,
- $p_s$ is the slice demand load of network slice s.

At a step SS50, such values of slice demand loads $p_1, p_2, p_3, \ldots, p_N$ determined by the slice controller SC for the different network slices may be fed to the deep reinforcement learning model DQL for learning on such slice demand loads $p_1, p_2, p_3, \ldots, p_N$.

At a step S70, the slice controller SC transmits the values of slice demand loads $p_1, p_2, p_3, \ldots, p_N$ to the user equipment UE1-UE12 deployed in the deployment area of the network system SYS. Such transmission may notably be performed via the core network CNW and the shared access network SAN of the network system SYS so that data related to the slice demand loads $p_1, p_2, p_3, \ldots, p_N$ may be signaled by the base stations BS to the user equipment UE1-UE12, for example as broadcasted, multicasted and/or unicasted signals.

In particular, the transmission of values of the slice demand loads $p_1, p_2, p_3, \ldots, p_N$ at step S70 enables to shape the incoming user requests, notably on a long-term sight for future iterations of the slice admission control mechanism. Indeed, based on the values of the slice demand loads $p_1, p_2, p_3, \ldots, p_N$, each user equipment UE1-UE12 will update or adapt its future slice requests such as to demand resources from the network slices with the lowest values of slice demand loads $p_1, p_2, p_3, \ldots, p_N$. For example, following the reception of the slice demand loads $p_1, p_2, p_3, \ldots, p_N$, a user equipment UE3 may reduce the throughput parameter of is service level specifications in its upcoming slice request for a network slice s if the corresponding network slice s offers throughput service and has a slice demand load $p_s$ exceeding a predetermined load threshold. Such predetermined load threshold may be a preconfigured value stored by each user equipment UE1-UE12. Based on the values of the slice demand loads $p_1, p_2, p_3, \ldots, p_N$, the user equipment UE1-UE12 may also determine the network slice to be requested as well as the values of the quality of service parameters to be required in the slice request in order to be admitted by the slice controller SC. The user equipment UE1-UE12 may also, based on the values of the slice demand loads $p_1, p_2, p_3, \ldots, p_N$, proceed to steer their respective user requests in multiple demands in order to be allocated resources in different network slices : thus, a unique slice request for a network slice s having a high value of slice demand load $p_s$ (that is, exceeding the predetermined load threshold) will be substituted by several slice requests for several network slices having low values of slice demand load (that is, inferior to the predetermined load threshold). The proposed slice demand load scheme thus enables to shape the incoming user requests in order to curb slice outage and increase the admission of slice requests, thus increasing the reward and utility gain of the system SYS. Such request shaping thus relies on informing the user equipment UE1-UE12 emitting user requests about the slice demand loads $p_1,p_2,p_3,...,p_N$ in all network slices. At such step S70, the value of the load parameter $\lambda$ and/or the values of the slice service variables $t_1,t_2,t_3,...,t_N$ may also be transmitted to the user equipment UE1-UE12. In particular, since such slice demand loads $p_1,p_2,p_3,...,p_N$ depend on the derivatives of the slice utility functions $U_1$, $U_2$, $U_3$, $t_2$,..., $U_N$, which are approximated, estimated and/or predicted by a machine learning model - such as a deep reinforcement learning model comprising a neural network -, a unique learning algorithm - e.g., a unique neural network - may be used to generate the actions to be taken by the slice controller while maximizing the slice utility gains $U_1,U_2,U_3,...,U_N$.

At a step S7, based on the utility gain or loss $\frac{\partial}{\partial t_s}(U_s(t_1, t_2, t_3, ..., t_N))$ determined at step S3, the slice controller SC decides on an admission of the processed user request, that is to admit the slice request to network slice s if the utility gain $\frac{\partial}{\partial t_s}(U_s(t_1, t_2, t_3, ..., t_N))$ for such network slice s is positive, or to refuse the slice request if the utility gain $\frac{\partial}{\partial t_s}(U_s(t_1, t_2, t_3, ..., t_N))$ is negative.

Such decision taken at step S7 is notably fed to the deep reinforcement learning model DQL at a step SS7 so that the decision is learnt by the machine learning model DQL in correspondence to the observed state of the environment of the network system SYS.

Such decision taken at step S7 notably affects the overall state of the network system SYS and generates a rewards (either positive or negative) at a step SS8 on the utility of the system SYS. Such reward may notably be learnt - for example as the utility value of the overall utility function U of the network system SYS - by the deep reinforcement learning model DQL in correspondence with the state of the system observed at step S2, the utility gain determined at step S3 and the decision taken by the slice controller SC at step S7.

In an embodiment, an update step S60 of the value of the load parameter $\lambda$ may also be performed after step S50 :

$$\lambda_{k+1} = \lambda_k - \delta_k \left( I - \sum_{s=1}^{N} p_s t_s \right)$$

where :

- $\lambda_{k+1}$ is the updated value of the load parameter for a next iteration k+1,
- $\lambda_k$ is the current value of the load parameter at current iteration k, such current value $\lambda_k$ being used at step S4,
- I is the current resource budget parameter at current iteration k,
- $p_s$ is the value of the slice demand load of the network slice s at current iteration k,
- $t_s$ is the value of the slice service variable of the network slice s at current iteration k,
- $\delta_k$ is a gradient parameter computed at current iteration k.

The gradient parameter $\delta_k$ may for example be set and/or fixed via a gradient descent technique, for example at $10^{-1}$. The gradient parameter $\delta_k$ may also be an updated parameter, which value is decreased as the square root of the iteration k, for example as $\delta_k = \frac{10^{-1}}{\sqrt{k}}$

The current value $\lambda_k$ of the load parameter $\lambda$ may be fed to the deep reinforcement learning model DQL and stored by the slice controller SC, notably to be used at step S4 for future iterations.

In another embodiment, load parameter $\lambda$ may also be set as a fixed parameter.

In the context of the present disclosure, the deep reinforcement learning model DQL learns slice demand loads $p_s$ of all network slices as :

$$p_s = \frac{1}{\lambda}\frac{\partial U_s}{\partial t_s}$$

Thus, the deep reinforcement learning model DQL may learn the slice utility functions $U_s$ but may also learn the slice utility gains $\frac{\partial U_s}{\partial t_s}$ .

It is now referred to figure 4. Figure 4 illustrates steps for performing a slice admission control mechanism according to an embodiment of the present disclosure. In such embodiment of the present disclosure, the slice controller SC notably optimizes the slice admission control mechanism by taking advantage of the specification flexibility of some applications and services run by the application layer APPC.

The slice admission control mechanism steps presented on figure 3 remain similar in figure 4 except for the block step B1. In an embodiment of the present disclosure, a block step B2 may be performed by the slice controller SC, as detailed in figure 4.

In block step B2, step S4 remain the same as in block step B1.

At a step S51, the utility gain $\frac{\partial}{\partial t_m}(U_s(t_1, t_2, t_3, \ldots, t_s))$ determined at step S3 may be evaluated by relaxing the constraint function $\sum_{s=1}^{N} t_s p_s < I$ set by the value of the budget parameter I. In other words, at step S51, the slice controller SC assumes a potential service flexibility of the application layer APPC and considers a relaxation of the constraint function $\sum_{s=1}^{N} t_s p_s < I$ (that is, the search for an increased optimal gain is performed on a larger space of states of the system SYS). The cost of such constraint relaxation is notably quantified by the value of the load parameter $\lambda$ obtained at step S4. In particular, the increased optimal gain potentially obtained from such constraint relaxation (that is, if the value of the budget parameter I set by the application layer APPC is changed) is transmitted to the application layer APPC at step S51 in a gain check signal.

At a step SS61, the slice controller SC receives a response signal from the application layer APPC in response to the gain check signal. Such response signal may notably contain a controller signal indicating that a relaxation of the constraint function $\sum_{s=1}^{N} t_s p_s < I$ is possible so as to obtain the increased optimal gain.

At a step S61 and upon receiving the response signal at step SS61, the slice controller SC then proceeds to update the value of the budget parameter I so as to obtain the increased optimal gain of the utility function Us :

$$I_{k+1} = I_k + \beta_k \lambda_k$$

where :

- $I_{k+1}$ is the updated value of the resource budget parameter which will be used for a future iteration k+1,

- $I_k$ is the current value of the resource budget parameter at current iteration k,

- $\lambda_k$ is the value of the load parameter at current iteration k obtained at step S4,

- $\beta_k$ is a gradient ascent parameter computed at current iteration k. For example, $\beta_k = \frac{1}{\sqrt{k}}$ .

Yet, if the utility gain obtained from relaxing the constraint function has not significantly varied (that is, increased or has decreased), step SS61 may not occur or indicates a denial of the constraint relaxation. By a significant variation of the utility gain, it may be understood that the utility gain, for example considered its absolute value - is above a preconfigured gain threshold, such gain threshold being for example set at five percent. In such case, step S61 is not performed by the slice controller SC (or similarly, the updated value of the resource budget parameter I is chosen to be the current value of the resource budget parameter, that is $I_{k+1}=I_k$). In particular, such update of the resource budget parameter I is performed providing that the resource budget parameter I remains below a maximum resource budget parameter related to a size of a resource pool of the network system SYS for example. The application layer APPC may also deny the constraint relaxation because the service level specifications (or SLS) managed by application layer are strict and/or there is no flexibility of the budget parameter I. In another embodiment, the updated value of the resource budget parameter I may be computed by the application layer APPC and step S61 consists in receiving such updated value transmitted in step SS61.

Such block step B2 enables to take advantage of the flexibility of the application layer APPC in order to further optimize the utility gain obtained from admitting a processed slice request.

At a step S7, based on such increased optimal gain, the slice controller SC then decides to admit the incoming user request. Yet, if the utility gain obtained (with or without relaxing the constraint function) is negative (that is, there is a loss of utility), the incoming user request will be rejected.

In a similar way to the embodiment presented on figure 3, an update step S60 of the value of the load parameter $\lambda$ may be performed after step S4. Such update of the load parameter $\lambda$ notably enables the network system SYS to be resource efficient at the application layer APP level.

Block steps B1 and B2 are each represented on figures 3 and 4 respectively. For the sake of clarity, each of the block steps B1 and B2 has been detailed on two distinct figures yet, in a preferred embodiment of the present disclosure, block steps B1 and B2 are performed in combination, cumulatively, successively and/or concurrently between steps S3 and S7, as represented on figures 3 and 4. Indeed, the proposed slice admission control mechanism may concurrently rely on :

- a shaping of the user requests, by providing the user equipment UE1-UE12 in the deployment area DA with values of slice demand load $p_s$ so as to shape upcoming user requests to be received by the slice controller SC. Such shaping aspect is represented in block step B1.

- a constraint relaxation so as to further increase the utility gain $U_s$ of the network slices s by taking advantage of a potential flexibility of the application layer APPC. Thus, the resource budget I of the network system SYS may be dynamically updated via the application layer APPC. Such constraint relaxation aspect is represented in block step B2.

The proposed slice admission control mechanism as described in figures 3 and/or 4 may be performed as a continuous loop, for example until available resources of the system SYS are allocated to all network slices.

It is now referred to figure 5. Figure 5 schematically represents the optimization of the slice admission control mechanism performed by the slice controller SC in the 5G communication network system SYS in the context of the present disclosure.

As represented by the arrow B1* on figure 5, the slice controller SC may transmit and update, at each iteration of the proposed slice admission control mechanism, the slice demand loads $p_1, p_2, p_3, ..., p_N$ via the 5G core network. Such slice demand loads $p_1, p_2, p_3, ..., p_N$ are then transmitted to the user equipment UE1-UE12 of the deployment area DA via the shared access network SAN for example. The slice controller SC may also inform, at each iteration of the slice admission control mechanism as represented by the arrow B2* on figure 5, the application layer APPC about the potential increased gain of the utility function Us due to a change of the budget parameter I. The application layer APPC thus has the possibility at such stage to relax the service level specifications (or SLS) managed at the edge computing level EC, so as to optimize the utility gain.

It is now referred to figure 6. Figure 6 schematizes a structural architecture of a slice controller SC performing a slice admission control mechanism within a 5G communication network system SYS.

The slice controller SC comprises an input module INP, enabling the slice controller SC to receive data and control signals from the 5G core network CNW and the control plane of the application layer APPC notably. The input module INP notably receives slice requests for resource allocation to be processed and observed states of the network system SYS, provided by the core network CNW notably.

The slice controller SC is notably able to perform multiple iterations of a slice admission control mechanism in order to manage the admission of user requests for slice resources in the network system SYS. To that end, the slice controller SC comprises a processing unit PROC executing steps for performing a slice admission control mechanism. In particular, in the context of the present disclosure, such processing unit comprises :

- a slice demand load module SDL, which enables the slice controller SC to determine and update values of slice demand loads $p_1, p_2, p_3, ..., p_N$. Such slice demand load module SDL also communicates with the core network CNW in order to transmit such values to the user equipment UE1-UE12, for example via an output module OUT of the slice controller SC.

- a load parameter update module LPU, which enables the slice controller SC to quantify the cost of relaxing the constraint function in the search for an optimized utility gain by determining and updating a load parameter $\lambda$. Such load parameter update module LPU also communicates with the core network CNW in order to transmit such updated value of the load parameter $\lambda$ to the user equipment UE1-UE12, for example via an output module OUT of the slice controller SC.

- a resource budget update module RBU, which enables the slice controller SC to obtain an updated value of the budget parameter I set by the application layer APPC so as to obtain an optimized utility gain. Such resource budget update module RBU also communicates with the edge computing level EC and more particularly with the control plane of the application layer APPC, in order to inform the application layer APPC of the potential utility gain of relaxing the constraint function (that is, of changing the value of the budget parameter I), for example via an output module OUT of the slice controller SC.

- a machine learning module DRL, which enables the slice controller to determine, throughout learning on successive iterations of the slice admission control mechanism, an optimal slice admission policy. To that end, the machine learning module DRL may execute a Q learning or a deep reinforcement learning model in order to learn and replay on states, actions and subsequent utility gains or losses of previous iterations of the slice admission mechanism. The machine learning module DRL may be fed by data from other modules of the slice controller SC such as the load parameter update module LPU, the slice demand load module SDL and by other data received and or obtained by the slice controller SC.

The slice controller SC also includes a storage memory MEM. Such storage memory MEM may include also include a volatile memory. The storage memory MEM may for example store values of slice demand loads $p_1,p_2,p_3,...,p_N$, values of the slice service variables $t_1,t_2,t_3,...,t_N$, values of the load parameter $\lambda$ and the budget parameter I.

It is now referred to figure 7. Figure 7 represents a flowchart of steps performed by a user equipment for emitting a slice request to the communication network system SYS according to a request method as proposed in the present disclosure.

At a step S100, a user equipment (for example any user equipment among UE1 to UE12) deployed in the deployment area DA of the network system SYS may receive (current) values of slice demand loads $p_1,p_2,p_3,...,p_N$ respectively associated to the plurality of network slices deployed by the network system SYS.

Such slice demand loads $p_1,p_2,p_3, ...,p_N$ notably reflect a resource impact of ongoing slice requests received by the network system SYS on each network slice. Such slice demand loads $p_1,p_2,p_3,...,p_N$ notably reflect a resource consumption of incoming slice requests on each network slice. In other words, the higher the slice demand loads $p_1,p_2,p_3,...,p_N$, the higher the resource consumption of demand parameters of a slice request on such network slice.

At an optional step S200, the user equipment may also receive a (current) value of a load parameter $\lambda$ associated to a current network resource state in the overall network system SYS. Based on such current value of the load parameter $\lambda$ as well as on the received slice demand loads $p_1,p_2,p_3,t_2,..., p_N$, the user equipment may determine, at an optional step S300, the slice utility gain $\dfrac{\partial U_s}{\partial t_s}(t_1,...,t_N)$ of each network slice, for example as :

$$\frac{\partial U_s}{\partial t_s}(t_1,...,t_N) = p_s\lambda$$

The user equipment may thus be able to estimate a service utility, locally for each network slice based on the ongoing incoming slice requests.

Thus, at a step S400, based on at least the received slice demand loads $p_1,p_2,p_3,...,p_N$, or based on slice utility gains determined at the optional step S300, the user equipment determines slice request parameters associated to each of their slice requests to be transmitted to the network system SYS. Such slice request parameters may for example be service performance requirements for a transmission service to be performed by the user equipment. Such slice request parameters may for example include latency tolerance values, required throughout values, required reliability level etc. In particular, based on at least the received slice demand loads $p_1,p_2,p_3,...,p_N$, the user equipment may adapt such slice request parameters to the different network slices. In particular, the user equipment may determine such slice request parameters so as reduce as much as possible the resource consumption of such demand parameters on such network slice. In other words, the user equipment may adapt (or shape) its slice request parameters in order to have slice requests for one or several network slices having the lowest slice demand loads $p_1,p_2,p_3,...,p_N$.

At a step S500, the user equipment may send slice requests (considered as upcoming slice requests for the network system) to the network system, for example to a buffering unit BF or to a slice controller SC of the network system SYS. Such slice requests may notably include the adapted slice request parameters as shaped at step S400.

At a step S600, the user equipment may potentially receive data related to a decision of admission of its slice requests. For example, the user equipment may receive network resources for one or several of its slice requests, meaning that such slice requests are admitted by the slice controller. Step S600 may also include an expiration of a timer without receiving network resources from the network system SYS, meaning that the slice requests are still buffered (and thus not admitted by the slice controller).

By adapting slice request parameters at step S400 based on at least received slice demand loads $p_1, p_2, p_3, ..., p_N$, the user equipment maximizes its chances to have admitted slice requests at step S600.

Such request method may for example be performed by a user processing circuit (not represented on the figures) of the user equipment, such user processing circuit comprising for example at least a user processing unit (or user processor).

**Claims**

1. An admission control method performed by a slice controller, for performing a slice admission request admission control in a communication network system, said communication network system deploying a plurality of network slices,
   the admission control method comprising steps of:

   a) receiving at least one slice admission request from at least one user equipment deployed in the communication network system, said slice admission request containing at least data related to slice request parameters,
   b) obtaining network parameters related to at least an overall state of network resources in the plurality of network slices,
   c) determining, for each network slice (s) of the plurality of network slices, :

   - a slice service variable ($t_s$) related to required network resources from the network slice to admit the slice admission request, said slice service variable ($t_s$) being determined based on at least the slice request parameters and the network parameters,
   - a slice utility gain related to a variation of a slice utility function ($U_s$) to be expected from a utilization of the required network resources from the network slice to admit the slice admission request, said slice utility function ($U_s$) depending on the slice service variables respectively associated to the plurality of the network slices, the slice utility gain being determined based on at least a machine learning model,
   - a slice demand load ($p_s$) related to consumed network resources in the network slice if the slice admission request is admitted, said slice demand load ($p_s$) being determined based on at least the slice utility gain of the network slice (s),

   d) transmitting the slice demand loads respectively associated to the plurality of the network slices to the user equipment,
   e) feeding the slice demand loads respectively associated to the plurality of the network slices to the machine learning model,
   f) based on the slice utility gain, determining a decision on the admission of the slice admission request.

2. The admission control method according to claim 1, wherein the slice admission control includes performing a plurality of iterations of at least the steps a) to f), two successive iterations (k, k+1) being spaced based on an iteration parameter.

3. The admission control method according to claim 2, wherein the slice utility gain is determined, at a current iteration (k+1), based on a learning of at least the slice demand loads fed to the machine learning model at previous iterations (k).

4. The admission control method according to any one of the precedent claims, wherein the slice demand load ($p_s$) is determined as :

$$p_s = \frac{1}{\lambda} \times \frac{\partial U_s}{\partial t_s}(t_1, ..., t_N)$$

where :

   - $p_s$ is the slice demand load for the network slice (s),

- $\lambda$ is a load parameter, said load parameter being related to a total amount of network resources in the plurality of the network slices if the at least one slice admission request from the at least one user equipment is admitted,
- $t_1, \ldots t_s \ldots, t_N$ are the slice service variables respectively associated to the plurality of the network slices,
- $\frac{\partial U_s}{\partial t_s}(t_1, \ldots, t_N)$ is the slice utility gain for the network slice (s).

5. The admission control method according to claim 4 taken in combination with claim 2, further comprises, before determining the slice demand load ($p_s$), :
obtaining a value of the load parameter ($\lambda$),
and wherein the value of the load parameter ($\lambda$) is updated between two successive iterations (k, k+1) as :

$$\lambda_{k+1} = \lambda_k - \delta_k \left( I - \sum_{s=1}^{N} p_s t_s \right)_k$$

where :

- $\lambda_{k+1}$ is the updated value of the load parameter at iteration k+1,
- $\lambda_k$ is the value of the load parameter at iteration k,
- $I$ is a resource budget parameter,
- $p_s$ is the slice demand load of the network slice (s),
- $t_s$ is the slice service variable of the network slice (s),
- $\left( I - \sum_{s=1}^{N} p_s t_s \right)_k$ is a difference determined at the iteration k,
- $\delta_k$ is a gradient parameter computed at iteration k, said gradient parameter being related to a variation speed of the load parameter with respect to the iterations k and k+1.

6. The admission control method according to any one of claims 4 and 5 taken in combination with claim 2, further comprises :
feeding the load parameter ($\lambda$) to the machine learning model,
and wherein the slice utility gain is determined, at a current iteration (k+1), based on a learning of at least the load parameter fed to the machine learning model at previous iterations (k).

7. The admission control method according to any one of claims 4 to 6 further comprises :
transmitting the load parameter ($\lambda$) to at least the user equipment.

8. The admission control method according to claim 2, wherein, after a number of predetermined iterations, the slice admission control is performed based on a sub-part of the plurality of network slices, such sub-part being composed by network slices for which the corresponding slice demand loads are inferior to a predetermined load threshold value.

9. The admission control method according to any one of the preceding claims, wherein the decision to admit the slice admission request is based on optimizing a service utility function of the plurality of the network slices, said service utility function being expressed as :

$$\max \sum_{s=1}^{N} U_s(t_1, t_2, \ldots, t_N)$$

and said service utility function being constrained by a constraint function expressed as :

$$\sum_{s=1}^{N} t_s p_s < I$$

where :

- $U_s(t_1, t_2,.., t_N)$ is the utility function of the network slice (s),
- s is an index identifying a network slice among the plurality of network slices,
- N is the number of network slices in the communication network system,
- $p_s$ is the slice demand load for the network slice (s),
- $t_s$ is the slice service variable of the network slice (s),
- I is a resource budget parameter set by an application layer of the communication network system, said resource budget parameter I being related to a total amount of network resources allocated to the plurality of network slices configured by the application layer.

10. The admission control method according to claim 9 further comprises, before step d), :

transmitting a gain check signal to the application layer, such gain check signal comprising data related to a change of at least one slice utility gain considering an updated value of the resource budget parameter (I).

11. The admission control method according to claim 10 taken in combination with claim 2 further comprises :
based on a response signal received from the application layer, obtaining an updated value of the resource budget parameter (I) between the two successive iterations (k, k+1) as :

$$I_{k+1} = I_k + \beta_k \lambda_k$$

where :

- $I_{k+1}$ is the updated value of the resource budget parameter at iteration k+1,
- $I_k$ is the value of the resource budget parameter at iteration k,
- $\lambda_k$ is the value of the load parameter at iteration k,
- $\beta_k$ is a gradient ascent parameter computed at iteration k.

12. A slice controller configured to perform a slice admission control mechanism in a communication network system, said communication network system deploying a plurality of network slices, such slice controller comprising at least:

- a processing unit, and
- a non-transitory computer-readable medium comprising instructions stored thereon, which, when executed by the processing unit, configure the slice controller to perform the admission control method according to any one claims 1 to 11.

13. An admission request method performed by a user equipment for emitting a slice admission request for at least one selected network slice in a communication network system deploying a plurality of network slices, said slice admission request containing at least data related to slice request parameters, the admission request method comprising steps of :

receiving slice demand loads ($p_s$) respectively associated to the plurality of the network slices, each slice demand load being related to consumed network resources in the corresponding network slice if the slice admission request is admitted,
based on at least said received slice demand loads, adapting slice request parameters of the slice admission request, so as to request network resources from the at least one selected network slice of the plurality of network slices, said selected network slice having a corresponding slice demand load below a predetermined load threshold value,
emitting the slice admission request based on said adapted slice request parameters.

14. A user equipment configured for emitting a slice admission request for at least one selected network slice in a communication network system deploying a plurality of network slices, said user equipment comprising at least:

- a user processing unit, and
- a user non-transitory computer-readable medium comprising instructions stored thereon, which, when executed by the user processing unit, configure the user equipment to perform the admission request method according to claim 13.

15. A computer program product comprising program instructions code stored on a computer-readable medium for the execution of one of :

- the admission control method according to any one of claims 1 to 11, and
- the admission request method according to claim 13.

FIG. 1

EP 4 346 263 A1

FIG. 2

EP 4 346 263 A1

FIG. 3

REC REQ TS — S1

DET SSV — S2

DET UTLY GN — S3

DQL

SS8

SS3

SS4

ST LP — S4

UPD LP — S60

TSM UTLY GN/LSAL — S51

UPD I — S61

B2

DEC ADM/REJ SR — S7

SS7

SS61

APPC

**FIG. 4**

FIG. 5

EP 4 346 263 A1

FIG. 6

REC SL DD LDS — S100

REC LD PARAM — S200

DET NW SV UTIL GN — S300

DET SL DD PARAM — S400

SND SL REQ — S500

REC ADM DEC — S600

# FIG. 7

**EP 4 346 263 A1**

Europäisches
Patentamt
European
Patent Office
Office européen
des brevets

# EUROPEAN SEARCH REPORT

Application Number

EP 22 30 6452

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 396 997 A1 (NEC LABORATORIES EUROPE GMBH [DE]) 31 October 2018 (2018-10-31)<br>* paragraph [0012]; figure 2 *<br>* paragraph [0016] *<br>* paragraph [0018] – paragraph [0023] *<br>* paragraph [0037] – paragraph [0039] *<br>* paragraph [0043] – paragraph [0045] *<br>* paragraph [0049] *<br>* paragraph [0062] *<br>* paragraph [0080] *<br>————— | 1-15 | INV.<br>H04W24/02<br>H04W48/02 |
| A | Christian Mannweiler: "Initial overall architecture and concepts for enabling innovations",<br>5G Mobile Network Architecturefor diverse services, use cases, and applications in 5G and beyondDeliverable D2.2,<br>1 January 2018 (2018-01-01), pages 1-111,<br>XP055512308,<br>DE<br>Retrieved from the Internet:<br>URL:https://5g-monarch.eu/wp-content/uploads/2018/07/5G-MoNArch-761445_D2.2_Initial_overall_architecture_and_concepts_for_enabling_innovations_v1.0.pdf<br>* page 71 – page 73 *<br>* page 77 – page 78 *<br>————— <br>-/-- | 1-15 | |
| | | | TECHNICAL FIELDS SEARCHED (IPC) |
| | | | H04W |

The present search report has been drawn up for all claims

| Place of search | Date of completion of the search | Examiner |
|---|---|---|
| Munich | 22 February 2023 | Stefanis, Dimitrios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

37

| Europäisches Patentamt European Patent Office Office européen des brevets | EUROPEAN SEARCH REPORT | Application Number EP 22 30 6452 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SCIANCALEPORE VINCENZO ET AL: "RL-NSB: Reinforcement Learning-Based 5G Network Slice Broker", IEEE /ACM TRANSACTIONS ON NETWORKING, IEEE / ACM, NEW YORK, NY, US, vol. 27, no. 4, 1 August 2019 (2019-08-01) , pages 1543-1557, XP011740938, ISSN: 1063-6692, DOI: 10.1109/TNET.2019.2924471 [retrieved on 2019-08-15] * page 2; figure 1 * * Section V; page 6 * * Section VIII; page 15 * ----- | 1-15 | |

TECHNICAL FIELDS SEARCHED (IPC)

The present search report has been drawn up for all claims

| Place of search | Date of completion of the search | Examiner |
|---|---|---|
| Munich | 22 February 2023 | Stefanis, Dimitrios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 30 6452

This annex lists the patent family members relating to the patent documents cited in the above-mentioned European search report.
The members are as contained in the European Patent Office EDP file on
The European Patent Office is in no way liable for these particulars which are merely given for the purpose of information.

22-02-2023

| Patent document cited in search report | | Publication date | Patent family member(s) | | Publication date |
|---|---|---|---|---|---|
| EP 3396997 | A1 | 31-10-2018 | EP | 3396997 A1 | 31-10-2018 |
| | | | US | 2018317133 A1 | 01-11-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **NGUYEN, DINH et al.** *Application of Deep Reinforcement Learning in Communications and Networking : A Survey*